# EUROPEAN PATENT SPECIFICATION

(11) **EP 1 247 378 B1**
(45) Date of publication and mention of the grant of the patent: **04.05.2005**
(21) Application number: 99967606.7
(22) Date of filing: 23.12.1999
(51) Int. Cl.: H04L 12/56, H04Q 7/20, H04Q 7/38

(54) **METHODS AND SYSTEMS FOR ROUTING MESSAGES IN A COMMUNICATIONS NETWORK**
VERFAHREN UND SYSTEME ZUR NACHRICHTENLENKUNG IN EINEN KOMMUNIKATIONSNETZ
PROCEDES ET SYSTEMES PERMETTANT D'ACHEMINER DES MESSAGES DANS UN RESEAU DE COMMUNICATION

(43) Date of publication of application: 09.10.2002
(73) Proprietor: Tekelec, Calabasas, CA 91302 (US)
(72) Inventor: WEST, Robert, Fulton, Jr., Raleigh, NC 27613 (US); MCCANN, Thomas, Matthew, Morrisville, NC 27560 (US); GOPALA RAO, Raghavendra, Cary, NC 27513 (US)
(74) Representative: Skuhra, Udo, Dipl.-Ing.
(86) International application number: PCT/US1999/030861
(87) International publication number: WO 2001/048981

(56) References cited:
- US-A- 5 457 736
- US-A- 5 819 178
- US-A- 5 822 694
- US-A- 5 854 982
- US-A- 5 878 347
- US-A- 5 878 348

## Description

### Technical Field

The present invention relates to the routing of signaling messages in a communications network, and, more particularly, to methods and systems for providing a switching node that incorporates flexible message routing functionality.

### Background Art

Within the global wireless telecommunications industry, the current trend in network technology is divided between Global System for Mobile Communications (GSM) and American National Standards Institute (ANSI)-41 based architectures. In many respects, GSM and ANSI-41 based networks are quite similar, with the primary differences between the two technologies simply relating to the protocols used to communicate between the various network entities, and the operating frequencies of the communication handsets themselves. As such, in the interest of clarity, discussions of the present invention will henceforth be limited to GSM type network implementations. However, it should be appreciated that the present invention could be similarly practiced in an ANSI-41, Personal Communication Services (PCS) or similar type network.

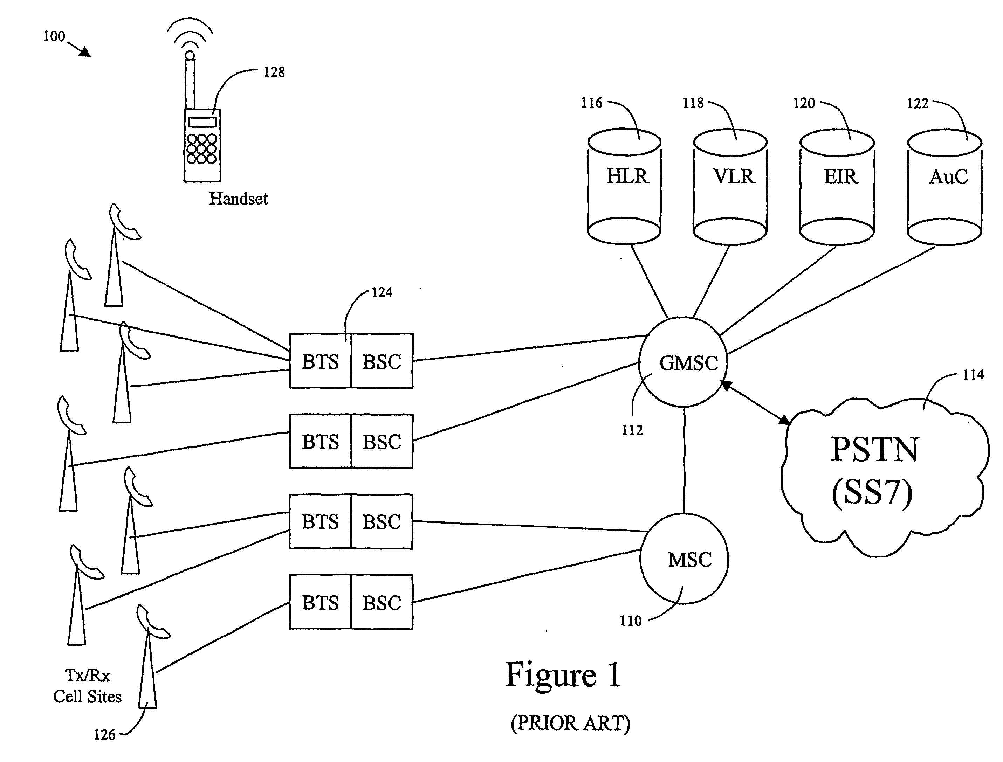

A typical GSM network architecture is illustrated in Figure 1. As shown in Figure 1, the typical GSM network, generally indicated by the numeral **100**, incorporates a number of functional elements or nodes which are appropriately interconnected so as to obtain the desired overall network service. These network nodes include a Home Location Register (HLR) **116**, a Visitor Location Register (VLR) **118**, an Equipment Identification Register (EIR) **120**, an Authentication Center (AuC) **122,** a Mobile Switching Center (MSC) **110,** and a Gateway Mobile Switching Center (GMSC) **112.** Briefly, the HLR **116** is a database that is used to store subscriber information for all customers within the home service area of the GSM service provider..Functionally, the HLR **116** is linked through a signaling network to other service areas such that subscriber information may be efficiently shared between geographically diverse networks, a characteristic that facilitates seamless inter-network roaming. Like HLR **116**, the VLR **118** is also a database that contains subscriber information. However, the VLR **118** is specifically used to store information related to subscribers who are not in their home service area. More particularly, the VLR **118** is where roaming related data for a customer is stored when the customer activates their handset outside of their designated home service area. The EIR node **120** retains information related to the identification serial numbers of all customer handsets that have been activated within the service area, while the AuC node **122** contains security or encryption key data associated with each of the handsets.

The four network elements described above (HLR, VLR, EIR, AuC) can be thought of as essentially databases or database processing nodes. Unlike these database nodes, the MSC **110** and GMSC **112** are generally identified as network switching elements. Among their manyfunctions, the MSC **110** and GMSC **112** are responsible for determining which cell site will take possession of a call. Such hand off control is facilitated by a communication link between the MSC**110** and an associated Base Station Controller (BSC) / Base Transceiver Station (BTS) pair **124**. A Tx/Rx cell site **126** may be associated with each BTS/BSC pair **124.** The GMSC **112** has the added distinction of providing a gateway interface to the Public Switched Telephone Network (PSTN) **114**; otherwise, MSC **110** and GMSC **112** functionality is very similar.
Furthermore, as generally illustrated in Figure 1, the GMSC **112** is also coupled via signaling links to the four database nodes described above, and as such, all signaling messages access to these database nodes is controlled and administered by the GMSC. although not illustrated in Figure 1, the MSC may also be coupled directly to the database nodes.

Of particular relevance to the present invention are the signaling aspects of the GSM network described above, especially those aspects associated with the signaling interactions between an HLR database node and an MSC or GMSC type node, In order to better understand these signaling interaction, a more detailed explanation of HLR operation is provided below.

Within a GSM wireless communication network, each mobile station handset 128 is assigned a unique identification number known as an International Mobile Subscriber Identity (IMSI) identification number. In the case of European GSM - type network implementations, the IMSI code is typically associated with a particular telephone handset. In such networks, each user can also be assigned one or more Mobile Station Integrated Services Digital Network (MSISDN) numbers. In the wireless telecommunications industry, MSISDN numbers are analogous to the 10 digit telephone numbers in a conventional North American wired network. The fact that multiple MSISDN numbers can be associated with a single IMSI number, indicates that more than one MSISDN number can be assigned and used to reach a single mobile station handset. It should be appreciated that in this disclosure, the term "Mobile Identification Number" (MIN) is used generically to refer to IMSI, MSISDN, Mobile Global Title, ANSI-41 Mobile Identification Numbers (MIN) and Mobile Directory Numbers (MDN), and other identification numbers associated with subscribers or services in a wireless communication network.

In any event, an MSISDN number is dialed whenever a user wants to communicate with a particular mobile station handset. An MSC or GMSC, by analyzing a part of the dialed MSISDN number, determines the particular HLR that is storing routing information associated with the called mobile station. By retrieving and utilizing such routing information, the GSM network is able to locate the called mobile station in response to a call attempt so that a call connection can be established between the calling party and the called mobile station. It should also be appreciated that, depending on the nature of the call or signaling event, an MSC may alternatively analyze and perform the HLR lookup based on the IMSI or MSISDN number associated with the called or calling party.

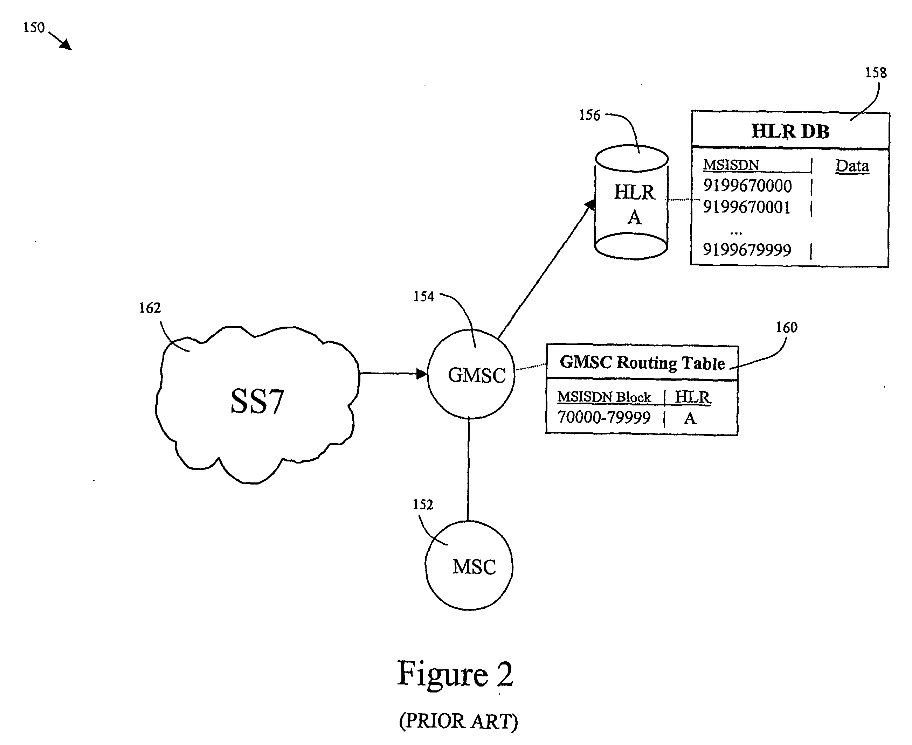

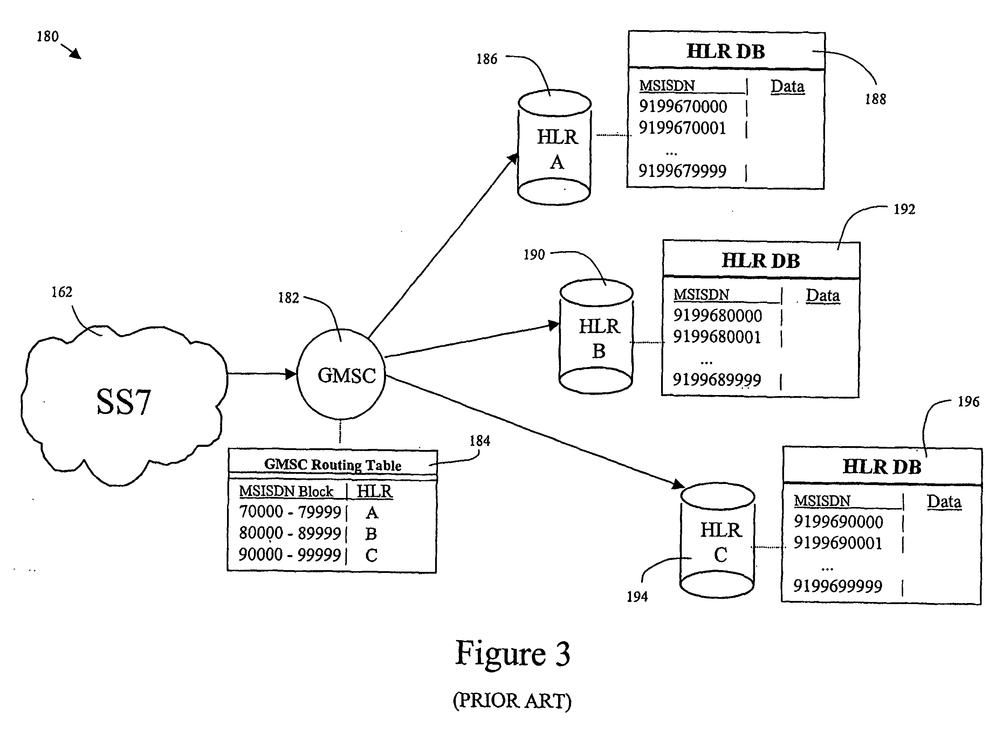

Figure 2 illustrates a typical GSM network architecture, generally indicated by the numeral **150**, which includes a GMSC **154** that is linked to both an MSC **152** and a single HLR unit **156**. GMSC **154** includes a routing table **160**, while HLR **156** includes a database table **158**. Figure 3 also illustrates a typical GSM network architecture, generally indicated by the numeral**150**, which includes a GMSC **154** that is linked to both an MSC **152** and a single HLR unit **156**. GMSC **154** includes a routing table **160**, while HLR **156** includes a database table **158**. Figure 3 also illustrates a typical GSM network architecture, generally indicated by the numeral**180**, which includes a GMSC **182** linked to several HLR units. More particularly, GMSC **182** is coupled via signalling links to HLR A **186,** HLR B **190,** and HLR C **194,** and necessarily to HLR database tables **188**, **192**, and **196**, respectively. In both Figures 2 and 3, GMSCs **154** and 182 may be connected to SS7 Network **162**.

In the examples illustrated in both Figures 2 and 3, each of the HLRs is configured to service a pre-defined block of subscriber MSISDN numbers. In general, a specific series or block of MSISDN (or IMSI) numbers are pre-assigned to each HLR in a service provider's network. It should be appreciated that the HLR database and GMSC Routing Table structures shown in Figures 2 - 3 are merely illustrative of the high level information storage concept and are not intended to represent the actual data structures that would typically be implemented in such network nodes. In many cases, service providers are not able to alter these blocks of assigned numbers within a given HLR unit because of routing limitations of the MSC associated with the HLR unit. Consequently, service providers have no opportunity to dynamically re-allocate their MSISDN number base across multiple HLRs, so as to more efficiently utilize existing HLR resources (i.e., load sharing). It should be noted that this limitation is typically the result of routing table restrictions in theMSCs, and generally not database storage restrictions in the HLRs. That is, although HLRs can generally be populated so as to contain subscriber data entries for any IMSI or MSISDN number,MSCs are typically only capable of routing messages based on an IMSI or MSISDN block in which the message's IMSI or MSISDN number falls. These IMSI or MSISDN blocks are comprised of a sequential range of IMSI or MSISDN numbers. Thus, it is the limited routing capability of an MSC or a GMSC that causes the problem, and typically not the HLR nodes.

For instance, in Figure 2, all traffic relating to calls associated with an MSISDN number between 9199670000 and 9199679999 will be routed to HLR A **156** by the associated GMSC **154**. As the service provider begins to acquire more and more customers (i.e., assigning more and more of the MSISDN. numbers in the allocated block or series 9199670000 to 9199679999), the traffic or congestion experienced at the HLR A **156** node will increase accordingly.

Now consider that a service provider owning the network elements illustrated in Figure 2 has acquired so many new customers that it is decided to invest in an additional pair of HLRs. This scenario is generally illustrated in Figure 3, where the two additional HLRs are identified as HLR B **190** and HLR C **194**. At the time of implementation HLR B **190** is populated with MSISDN number block 919968000 - 9199689999, and HLR C **194** is populated with MSISDN number block 9199690000 - 9199699999. These two HLRs are linked to the adjacent GMSC **182** and activated so as to service any calls corresponding to their pre-programmed MSISDN blocks.

The major shortcoming of such multiple HLR configurations can now be more fully appreciated. As generally indicated in Figure 3, despite the addition of the new HLR resource capacity represented by units B and C, all call traffic associated with MSISDN numbers 9199670000 - 9199679999 must still be handled by a single HLR, HLR A **188**. Even if the service provider has no customers within the MSISDN 9199680000 - 9199699999 number range, it is not possible for the service provider to dynamically re-allocate or re-distribute the "fully assigned" 9199670000 - 9199679999 MSISDN number block among the unused HLR B **192** and HLR C **196** units. Thus, it is quite possible that the service provider will operate in a situation where traffic to HLR A **188** is highly congested, while the HLR B **192** and HLR C **196** resources are completely unused. This can lead to less than efficient usage of installed resources, as it would be more efficient to load balance or share traffic more equally among the three HLR units.

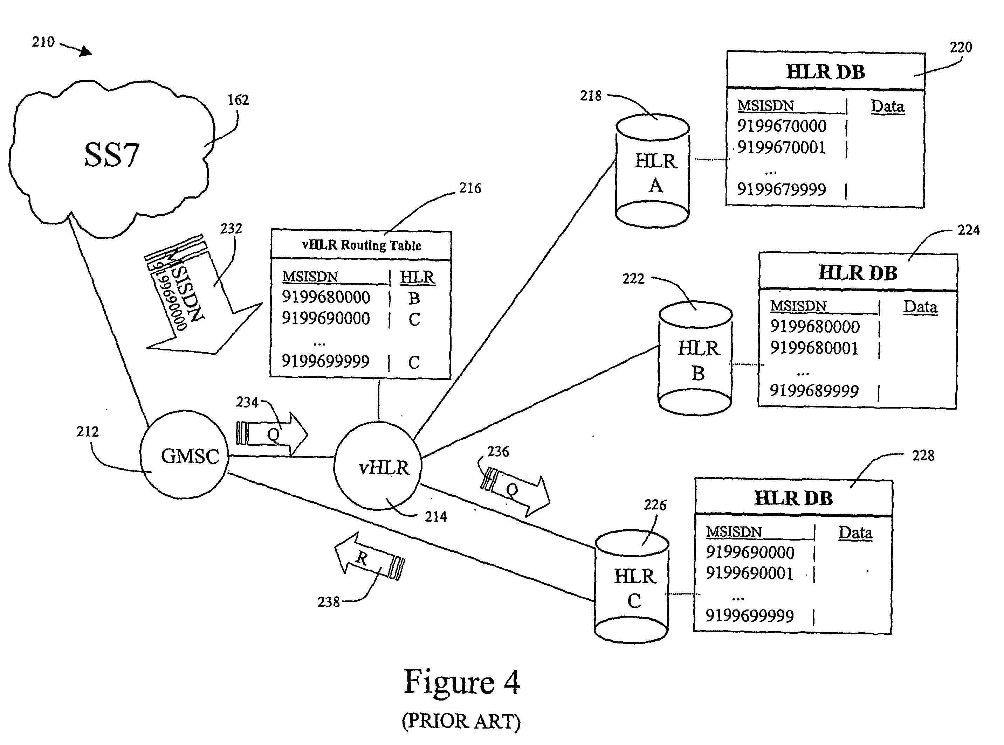

It should be appreciated that, in addition to the load sharing concerns, there are similar issues and similar needs that arise when considering the porting of subscribers from one service provider to another, otherwise known as local number portability (LNP). Once again, the central problem is the ability to freely distribute subscriber information among multiple HLR nodes. A detailed discussion of the specific problems associated with LNP is not provided in this disclosure, as the high-level issues and concerns are the same as those for the load sharing scenario described herein.
United States Patent No. 5,878,347 to Joensuu, et al., (hereinafter, "the '347 Patent") the disclosure of which is hereby incorporated by reference in its entirety, discloses one approach to solving some of the problems identified and discussed above. The solution described in the '347 Patent involves the implementation of a new network element, referred to as a virtual HLR (vHLR). Figure 4 of the present application and the following description illustrates the function of the vHLR in the '347 patent. Referring to communication network **210** illustrated in Figure 4, a vHLR node **214** is placed in the communication network pathway between a GMSC **212**
and a plurality of HLR nodes, HLR A **218,** HLR B **222**, and HLR C **226.** HLRs **218, 222,** and **226** contain subscriber databases **220, 224, 228,** respectively. The GMSC **212** sends signaling messages to the vHLR node **214** requesting subscriber information where the particular subscriber is associated with an IMSI or MSISDN type mobile station identification number. The vHLR **214** does not contain subscriber information; rather, the vHLR **214** contains a routing table **216** that correlates IMSI or MSISDN numbers with a particular HLR. More particularly, the routing table **216** contains information relating IMSI or MSISDN numbers to a corresponding network address associated with the HLR serving that IMSI or MSISDN subscriber.
The message routing technique disclosed by the '347 Patent is a key element of the invention described therein. As generally illustrated in Figure 4, a call originating from SS7 network **162** results in MSISDN=9199690000 **(232)** being communicated to GMSC **212**. GMSC **212** originates a message **234** and sends the message to vHLR **214,** when the vHLR node **214** receives a message **234** from the associated GMSC **212,** the message is addressed to and is delivered directly to the vHLR node **214.** The vHLR node **214** performs a table lookup, as described above, and reroutes the message to the appropriate HLR node, in this case HLR C **228.** This rerouting function is accomplished by altering the destination point code (DPC) of the message **236** routing label, such that the original DPC (PC=vHLR) is replaced by a new DPC (PC=HLR C). It is significant, and should be noted that the vHLR node **214** does not alter the origination point code (OPC) of the message routing label. That is, the OPC of the incoming message **234** is the same as the OPC of the outgoing message **236**, which is the point code of the GMSC **212**. Thus, the message arrives at HLR C **228** with an OPC equal to the point code of GMSC node **212**. HLR C **228** then responds with a message **238** that is addressed to the GMSC **212**. The HLR C response message **238** is not routed back through the vHLR node **214**.

While such a routing technique may save one or more routing "hops", from a network management perspective, this routing technique presents at least one significant problem. That is, in the event that an HLR should become unable to provide service, SS7 signaling convention requires that the HLR send a message to any signaling point (SP) that is attempting to communicate with it, alerting the SP to the impaired or out-of-service status of the HLR. Given the message flow described above, it will be appreciated that in such an out-of-service scenario, HLR C **226** would send a network management message to the originator of the incoming HLR C message **236**. The originator of the incoming HLR C message **236** is identified by the OPC field of the message **236** routing label. As described above, the vHLR **214** node does not alter the OPC field of the routing label, but instead leaves the OPC set to the address of the GMSC **212**. Thus, network management messages sent by HLR C **226** will be addressed to the GMSC **212**. The problem with such a message routing scheme is that the GMSC **212** has no "knowledge" of having sent a message to HLR C **226.** Once again, it will be appreciated that the DPC of the message **234** originally sent by the GMSC **212** was the network address of the vHLR **214.** That is, the GMSC **212** has knowledge of a message sent to the vHLR **214,** but no knowledge of a particular message destined for HLR C **226.** Implementation of such an SS7 message routing scheme would therefore present a large problem for SS7 network operators that have purchased and deployed a large number of network elements that operate in compliance with industry standard SS7 communication protocols and network management procedures.

Therefore, what is needed is a novel system and method of redirecting signaling messages among multiple HLR, EIR, AuC and other similar signaling database type nodes, where message routing occurs in such a way as to preserve compliance with existing industry standard network management signaling protocols.

US-A-5,457,736 describes a system and method adapted to provide microcellular Personal Communications Services (PCS) through the use of an improved Distributed Radio Port Controller (DRPC) architecture. It achieves the desired handover with minimal impact of the existing embedded base of switches by generating new calls from target Radio Port Controllers (RPCs) through the switches to anchor RPCs and internally bridging bearer channels without the knowledge of the switches. The system comprises a Home Location Register (HLR) for storing and providing subscription data and keeping track of where the mobile terminals are registered in order to deliver calls. The system further includes a Service Control Point (SCP) which is provided in electrical communication with the switch.

US-A-5,878,347 describes a method and apparatus for transporting a telecommunications data signal to a mobile station relocated from a first home location register (HLR) to a second HLR. Such a data signal comprises an incoming voice data signal and a Short Message Service (SMS) data signal. A network address representing a HLR associated with that mobile station and mobile identification number associated with that mobile station are correlated and stored in centralized data base. Whenever an incoming data signal is received by gateway node within the telecommunications network, a signal requesting routing information for that data signal is transmitted to the centralized data base instead of to the serving HLR.

### Disclosure of the Invention

According to one aspect, the present invention includes a flexible routing node. The flexible routing node includes a communication module capable of transmitting and receiving data packets over a network. A range-based database contains range-based rule records indexed by blocks of identification numbers. An exceptions-based database contains exception-based rule records indexed by a single identification number. A database subsystem controller accesses at least one of the databases to extract routing information for the data packet. Because the flexible routing node includes both range- and exception-based databases, flexibility in allocating mobile identification numbers among HLRs is increased. The database subsystem controller is adapted to initially direct the signaling message to the exception-based database and perform a lookup in the exception-based database based on a mobile identification number in the signaling message to locate the routing information; the database subsystem controller is adapted to direct the signaling message to the range-based database in response to failing the locate the routing information in the exception-based database; and the database subsystem controller is adapted to incorporate the routing information returned from the range or exception-based database into the signaling message.

Accordingly, it is an object of the present invention to provide a flexible routing node capable of performing both range- and exception-based database lookups.

It is another object of the present invention to provide a flexible routing node that complies with industry standard network management procedures.

Some of the objects of the invention having been stated hereinabove, other objects will become evident as the description proceeds, when taken in connection with the accompanying drawings as best described hereinbelow.

### Brief Description of the Drawings

Figure 1 is a network diagram illustrating a prior art GSM wireless telecommunication network architecture.
Figure 2 is a network diagram illustrating a prior art GSM wireless telecommunication network implementation that includes a single HLR node.
Figure 3 is a network diagram illustrating a prior art GSM wireless telecommunication network implementation that includes multiple HLR nodes.
Figure 4 is a network diagram illustrating a prior art GSM wireless telecommunication network architecture.
Figure 5 is a schematic diagram of a prior art signal transfer point switching node.
Figure 6 is a schematic network diagram illustrating a first routing database access scenario according to a preferred embodiment of a flexible routing node of the present invention.
Figure 7 is a schematic network diagram illustrating a second routing database access scenario according to a preferred embodiment of a flexible routing node of the present invention.
Figure 8 is a schematic network diagram illustrating an alternate network implementation of a flexible routing node of the present invention.
Figure 9a is a table which illustrates a sample G-FLEX™ database structure used in a preferred embodiment of a flexible routing node of the present invention.
Figure 9b is a table which illustrates a sample GTT database structure used in a preferred embodiment of a flexible routing node of the present invention.
Figure 10a is a table which illustrates partial content of a signaling message received and processed by a flexible routing node of the present invention in a first example scenario.
Figure 10b is a table which illustrates partial content of a signaling message received and processed by a flexible routing node of the present invention in a second example scenario.
Figure 10c is a table which illustrates partial content of a signaling message received and processed by a flexible routing node of the present invention in a third example scenario.
Figure 11 is a flow diagram illustrating the translation process implemented by a flexible routing node of the present invention.

### Detailed Description of the Invention

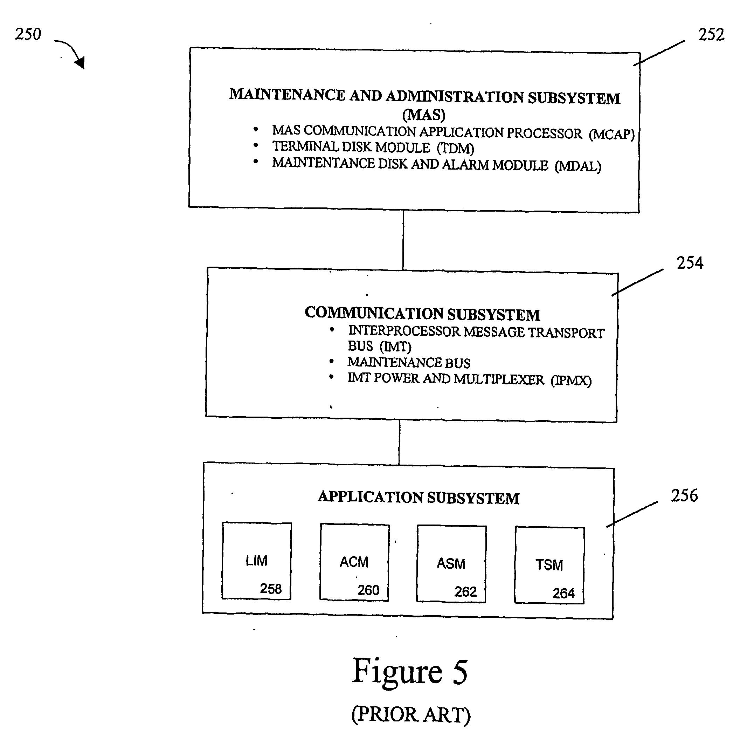

According to one embodiment, the present invention includes a flexible routing node for communicating with a GMSC and HLRs in a network. In a preferred embodiment, a flexible routing node employs an internal architecture similar to that of a high performance STP that is marketed by the assignee of the present application as the EAGLE® STP. A block diagram of an EAGLE® STP is shown in Figure 5. A detailed description of the EAGLE® STP may be found in the *Eagle Feature Guide* PN/9110-1225-01, Rev. B, January 1998, published by Tekelec, the disclosure of which is hereby incorporated herein by reference. As described in this publication, an EAGLE® STP **250** includes the following subsystems: a Maintenance and Administration Subsystem (MAS) **252**, a communication subsystem **254** and an application subsystem **256**. The MAS **252** provides maintenance communications, initial program load, peripheral services, alarm processing and system disks. The communication subsystem **254** includes an Interprocessor Message Transport (IMT) bus that is the main communication bus among all subsystems in the EAGLE® STP **250.** This high speed communications system functions as two 125 Mbps counter-rotating serial buses.

The application subsystem **256** includes application cards that are capable of communicating with the other cards through the IMT buses. Numerous types of application cards can be incorporated into STP **250**, including: a Link Interface Module (LIM) **258** that provides SS7 links and X.25 links, an Application Communication Module (ACM)**260** that provides a TCP/IP interface to an external monitoring device over Ethernet, and an Application Service Module (ASM) **262** that provides global title translation, gateway screening and other services. A Translation Service Module (TSM) **264** may also be provided for local number portability. A detailed description of the EAGLE® STP is provided in the above cited Feature Guide and need not be described in detail herein.

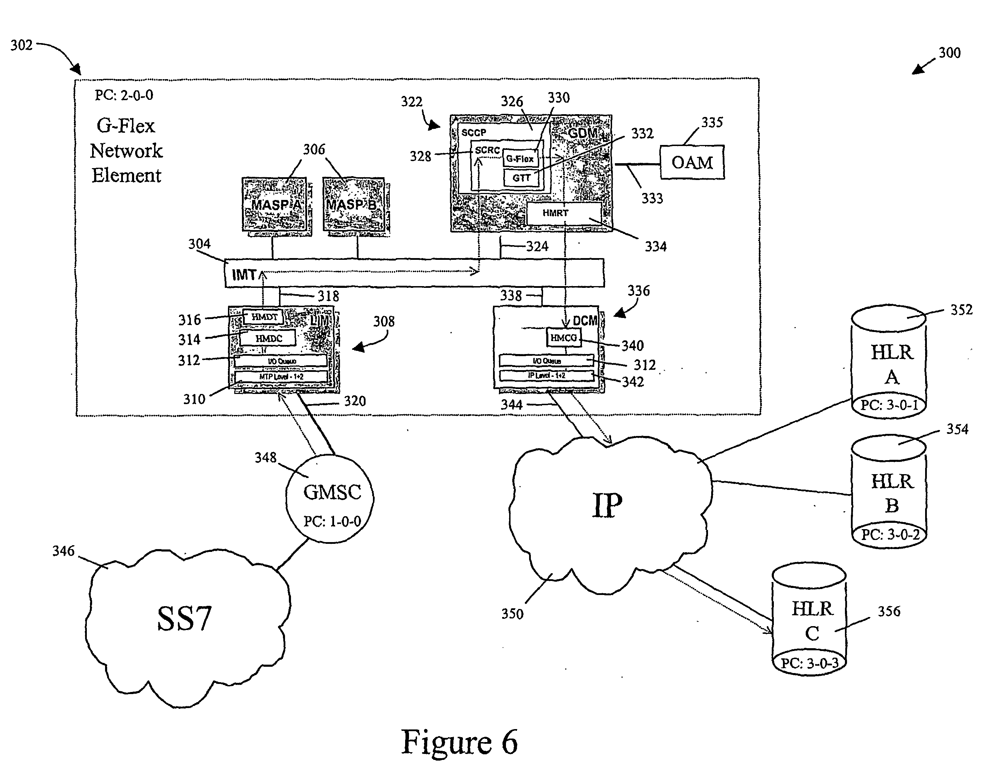

Figure 6 is a schematic diagram of a simplified GSM network **300** including a flexible node **302** according to an embodiment of the present invention. In addition to the flexible routing node **302**, GSM network **300** generally includes; an SS7 signaling network **346**, a Gateway Mobile Switching Center (GMSC) **348**, an Internet Protocol (IP) network **350,** a first Home Location Register (HLR) **352**, a second HLR **354**, and a third HLR **356**.

In the illustrated embodiment, flexible routing node **302** includes a high speed Interprocessor Message Transport (IMT) communications bus **304.** Communicatively coupled to IMT bus **304** are a number of distributed processing modules or cards including: a pair of Maintenance and Administration Subsystem Processors (MASPs) **306,** an SS7 enabled Link Interface Module (LIM) **308,** an IP enabled Data Communication Module (DCM) **336,** and a G-FLEX™ Database Module (GDM) **322.** These modules are physically connected to the IMT bus **304** by bus interfaces **318, 324,** and **338,** respectively. For simplicity of illustration, only a single LIM **308,** GDM **322,** and DCM **336** are included in Figure 6. However, it should be appreciated that the distributed, multi-processor architecture of the node **302** facilitates the deployment of multiple LIM, GDM, and DCM cards, all of which could be simultaneously connected to the IMT bus **304**.

MASP pair **306** implements the maintenance and administration subsystem functions described above. As the MASP pair **306** is not particularly relevant to a discussion of the flexible routing attributes of the present invention, the reader is referred to the above-mentioned Tekelec EAGLE® publications for a more detailed description of these system components.

Focusing now on LIM card functionality, in the illustrated embodiment LIM 308 is comprised of a number of sub-components including, but not limited to: an SS7 MTP level 1 and 2 layer process **310**, an I/O buffer or queue **312**, an SS7 MTP level 3 layer HMDC process **314**, and an HMDT process **316**. MTP level 1 and 2 layer process **310** provides the facilities necessary to send and receive digital data over a particular physical media / physical interface, as well as to provide error detection / correction and sequenced delivery of all SS7 message packets. I/O queue **312** provides for temporary buffering of incoming and outgoing signaling message packets. MTP level 3 HMDC process **314** performs a discrimination function, effectively determining whether an incoming SS7 message packet requires internal processing or is simply to be through switched, i.e., routed to another node. The HMDT process **316** handles the internal routing of SS7 message packets that require additional processing prior to final routing.

In general, a GDM card provides the databases and database control processes necessary to perform the required network address translations to achieve the flexible routing functionality implemented by embodiments of the present invention. The GDM **322** shown in Figure 6 is comprised, in part, of a Signaling Connection Control Part (SCCP) sub-module **326,** which further includes a database subsystem controller known as a Signaling Connection Routing Controller (SCRC) process **328**. The SCRC process **328** is responsible for number conditioning, the directing of incoming SS7 message packets to either a G-FLEX™ database process **330** or a Global Title Translation (GTT) database process **332,** and for modification of the message packets to include routing information returned by the G-FLEX™ or GTT database processes **330** and **332,** respectively. SS7 message packets leaving SCRC process **328** are received and further processed by an HMRT process **334**. The HMRT process **314** is responsible for the external routing of SS7 message packets that do not require additional processing by the flexible routing node **302.** That is, the HMRT process **334** determines to which LIM or DCM card an SS7 message packet should be routed for subsequent outbound transmission. It will also be appreciated from Figure 6 that GDM **322** is coupled to and serviced by an OAM subsystem **335** via an Ethernet connection **333.** OAM subsystem **335** is responsible for administration and maintenance of the G-FLEX™ and GTT databases **330** and **332,** respectively.

DCM **336,** shown in Figure 6, includes an HMCG process **340** which is responsible for monitoring congestion on the associated DCM linksets, and internally communicating this link congestion information to peer processes on other modules via the IMT bus **304**. Such link congestion information is used by the HMRT process **334** during outbound link selection operations. It should be appreciated that outgoing SS7 message packets routed through the DCM **336** will be transmitted out of the flexible routing node **302** and into an Internet Protocol (IP) network **350.** As the SS7 communication protocol and the IP communication protocol are not inherently compatible, all SS7 message packets that are to be sent into the IP network **350** are first encapsulated within an IP routing envelope prior to transmission. This IP encapsulation is performed by an I P encapsulation process **342.** The IP encapsulation process **342** is the IP protocol equivalent of the SS7 MTP level 1-2 layer process **310** of the LIM module **308.** Preferred packet formats for encapsulating various types of SS7 messages in IP packets is described in Internet Engineering Task Force (IETF) INTERNET DRAFT entitled Transport Adapter Layer Interface, May 28,1999, the disclosure of which is incorporated herein by reference in its entirety.

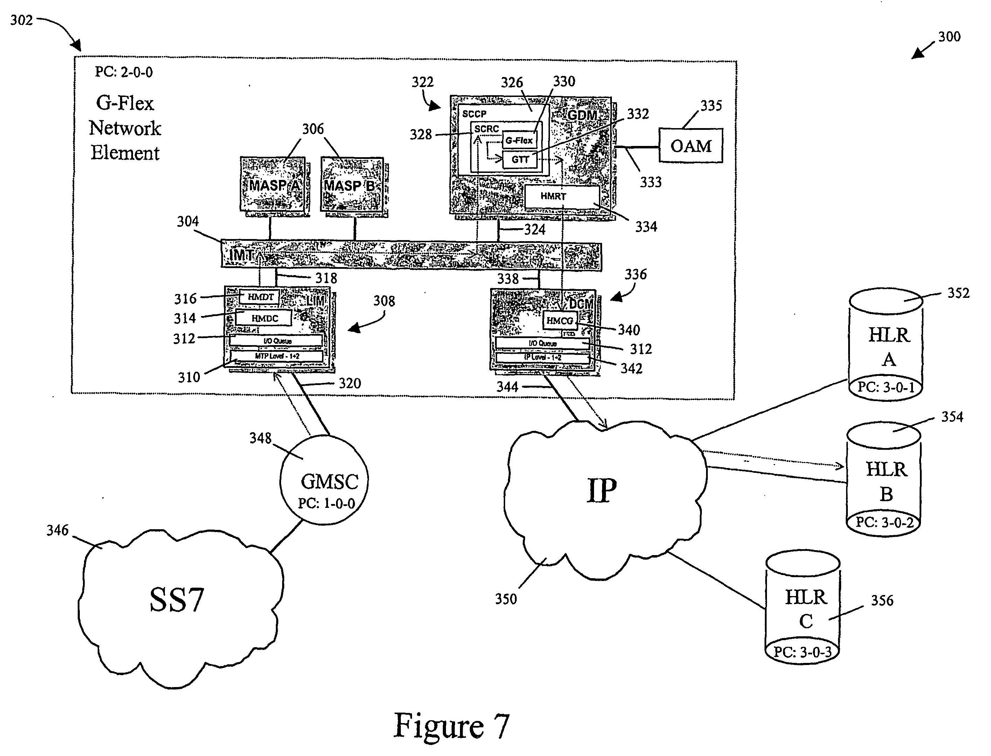

Once again, the description of LIM and DCM sub-components provided herein is limited to those sub-components that are relevant to the sample implementation scenarios illustrated in Figures 6 and 7. For a comprehensive discussion of additional LIM and DCM operations and functionality, the above-referenced Tekelec publications can be consulted.

With particular regard to the scenario illustrated in Figure 6, the Gateway Mobile Switching Center **348** is communicatively coupled to the flexible routing node **302** via an SS7 communication link **320**. More specifically, the GMSC node **348** is connected to LIM **308** via the SS7 communication link **320.** Connected to the external IP network **350** is the DCM module **336,** via an IP communication link **344.** Residing within and connected to the IP network **350** are the HLR nodes **352, 354,** and **356.** As such, an IP communication pathway exists between the DCM module **336** of the flexible routing node 302 and each of the HLR nodes **352**, **354**, and **356**. The IP communication pathway can be TCP/IP or UDP/IP. It should be appreciated that in an alternate embodiment of the flexible routing node **302** according to an embodiment of the present invention, the communication protocol implemented between the GMSC **348** and the flexible routing node **302** could be IP or another non-SS7 protocol, such as Asynchronous Transfer Mode (ATM) or Synchronous Optical Network (SONET). For instance, an IP communication link could just as effectively be used between the GMSC **348** and the flexible routing node **302.** In such a case, a suitably configured DCM module would be substituted for the LIM **308** shown in Figure 6. Likewise, the communication protocol implemented between the flexible routing node 302 and the HLR nodes **352, 354**, and **356** could be SS7, Interim Standard-41 (IS-41), GSM or another non-IP protocol. For example, an SS7 communication link could be employed between the flexible routing node **302** and the HLR nodes **352, 354,** and **356.** In such a case, multiple LIM modules would be substituted for the DCM **336** shown in Figure 6.

As stated above, one problem associated with load sharing and number porting among multiple HLR nodes is that conventional MSCs and GMSCs are only capable of block-based addressing. As such, it will be appreciated that one of the primary objectives of the flexible routing node according to an embodiment of the present invention is to provide a method by which a network operator can quickly and easily direct signaling messages associated with a given calling or called party to a particular HLR node. To facilitate such signaling message re-direction, the flexible routing node of the present invention employs a pair of complimenting routing databases which effectively map an IMSI or MSISDN number associated with a signaling message to the network address of the appropriate HLR node. These databases, described above, are referred to as the G-FLEX™ database, and the GTT database.

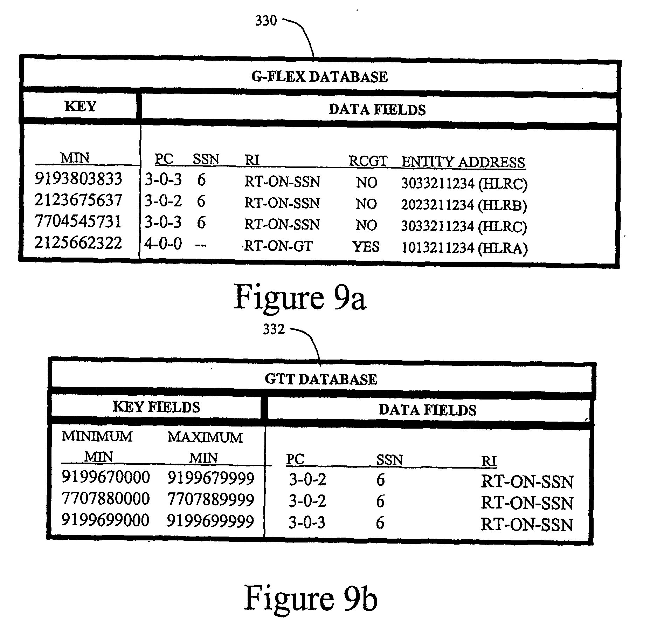

Figures 9a and 9b are database structure diagrams which are intended primarily to illustrate the key or indexing structures of the G-FLEX™ and GTT databases **330** and **332,** respectively. It should be appreciated that the G-FLEX™ and GTT database record structures and pseudo data presented in Figures 9a and 9b, while supportive of the examples shown in Figures 6 and 7, are merely illustrative of the basic information necessary to perform the required routing data lookups. In practice, the actual database record structures and overall database design may vary according to particular implementation requirements.

The complimentary database access scheme employed by the flexible routing node of the present invention requires that the GTT database **332** maintain a set of range or block-based routing rules while the G-FLEX™ database **330** contains exceptions to the block-based routing rules. Once again, this concept is generally illustrated in Figures 9a and 9b. By range or block-based routing rules, it is meant that a block or range of mobile identification numbers (IMSI, MSISDN, etc.) are associated with the network address of a particular HLR, EIR, AuC, Service Control Point (SCP), etc. Such a range-based routing rules database structure is similar to the routing database structures commonly employed in conventional GMSC nodes, as described above.

Referring to Figure 9b, the GTT or range-based database **332** includes key fields in the left hand column and data fields in the right hand column. The key fields represent ranges of mobile identification numbers associated with a particular node. For example, the first key field specifies a minimum mobile identification number of 9199670000 and a maximum mobile identification number of 9199679999. The data fields corresponding to this range include a Point Code (PC) of 3-0-2, a Subsystem Number (SSN) of 6, and a Routing Indicator (RI) of RT-ON-SSN for the network element corresponding to the range in the key field. The data included in the data fields are merely illustrative of data fields that can be included in range-based or GTT database **332**. Similar key fields and data fields are shown for other network elements.

Referring to Figure 9a, the G-FLEX™ or exceptions-based database **330** contains entries that are exceptions to the entries in the range-based database **332**. In Figure 9a, the left-hand column includes key values for each entry, and the right hand column includes data fields for each entry. The first entry includes a key field value of 9193803833. The data fields corresponding to the first key field value include a point code (PC) of 3-0-3, a Subsystem Number (SSN) of 6, a Routing Indicator (RI) of RT-ON-SSN, a Replace Called party Global Title digits (RCGT) value of NO, and an Entity Address 303211234, representing HLR C. These data fields are merely illustrative of the data fields that can be included in the exception-based or G-FLEX™ database **330.** The remaining entries in the database **330** contain similar data for other network elements.

The dual database architecture employed in the flexible routing node of the present invention provides a number of subtle benefits to the network operator. For example, the complimenting nature of the two databases optimally minimizes routing database memory resource requirements. Furthermore, the task of maintaining and administering theflexible routing node is greatly simplified, in that only exceptions to the conventional block-based routing rules must be explicitly entered in the G-FLEX™ database. If such were not the case and, for example, a particular network operator had data associated with 500,000 mobile subscribers stored in a one or more HLRs, the network operator would be required to create and store at least one unique routing record for each of the 500,000 subscribers. The exceptions-based structure of the flexible routing node database system simply requires, in such a case, that the operator create and store individual routing records in the G-FLEX™ database only for those IMSI or MSISDN numbers that do not adhere to the range or block-based rules that have been specified in the GTT database. For example, if a number is ported from one HLR to another HLR, the MSISDN number may be an exception to the block based rules in the second HLR. In the special case where all of the operator's IMSI or MSISDN numbers adhere to the block-based rules specified in the GTT database, the G-FLEX™ database would be empty. At the other extreme, where all of the operator's IMSI or MSISDN numbers do not adhere to the general block-based rules specified in the GTT database, the G-FLEX™ database would contain at least one entry for each of the operator's assigned mobile identification numbers.

The flexible routing node according to the present invention facilitates load sharing among HLRs. For example, if a service provider originally has two HLRs in service and subsequently purchases a third HLR, the G-FLEX™ database allows numbers allocated to the original HLRs to be re-allocated to the new HLR.

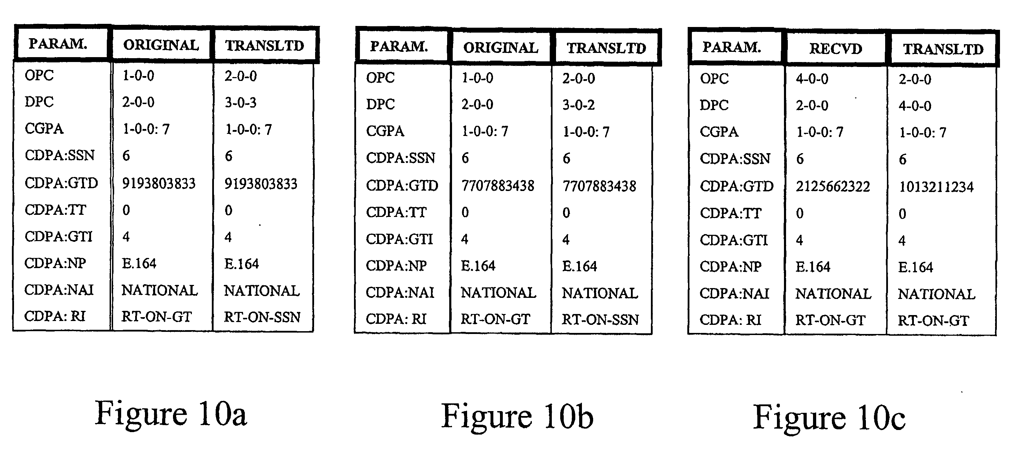

With regard to G-FLEX™ and GTT translation services, the parameters used either directly or indirectly to determine the type of translation service (e.g., G-FLEX™ service or GTT service) required by an incoming signaling message are included in Figures 10a - 10c. The left-hand column in each of Figures 10a-10c represents the parameters used to determine the type of translation service required. In the illustrated figures, these parameters generally include a Routing Indicator (RI), Global Title Indicator (GTI) parameter, a Translation Type (TT) parameter, a Numbering Plan (NP) parameter, and a Nature of Address Indicator (NAI) parameter. These parameters, their meanings within the context of an SS7 communication network, and their range of values are well known to those skilled in the art and consequently will not be discussed in detail. It should suffice to say that the preferred embodiment of the flexible routing node of the present invention relies on some or all of these parameters to determine the required translation service.

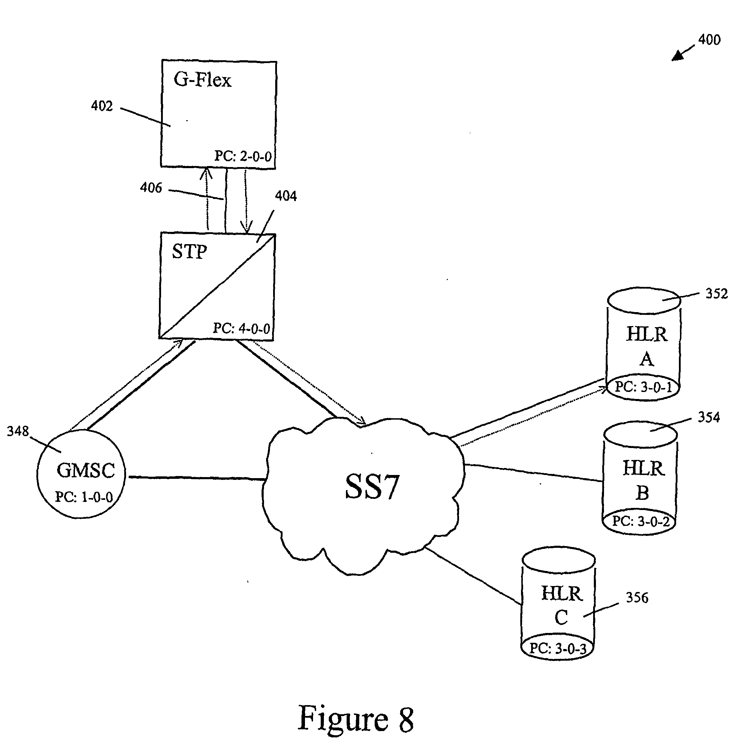

The center column in each of Figures 10a-10c represents original values, i.e., before translation, for the parameters illustrated in each left hand column. The right-hand column in each of Figures 10a-10c illustrates the values for each of the parameters in the left-hand column after translation. More specifically, the right-hand column in Figure 10a represents parameter values after a G-FLEX™ translation, which will be described with regard to Figure 6. The right-hand column of Figure 10b represents parameter values after a default global title translation, which will be described in detail with regard to Figure 7. Finally, the right hand column of Figure 10c represents parameter values after an intermediate global title translation, which will be described in detail with regard to Figure 8.

Once the general type of translation service requirement has been made (i.e., G-FLEX™ translation or GTT translation), the specific type of translation service is next determined. With particular regard to G-FLEX™ translation services, the types of services available could include GSM services, such as HLR, EIR, AuC, etc. Determination of the specific G-FLEX™ translation service is made through examination of a Subsystem Number (SSN) parameter that is contained in the Called Party Address (CdPA) field of the signaling message. Once again, the SSN parameter is well known to those skilled in the art and consequently will not be discussed in detail herein. It should suffice to say that the flexible routing node of the present invention is configured to recognize certain SSN values as indicating the need for a particular type of G-FLEX™ translation service.

From an operational standpoint, signaling messages requiring routing database processing are first serviced by the exception-based G-FLEX™ database. That is, a lookup is performed in the G-FLEX™ database based on either the IMSI or MSISDN number associated with the incoming signaling message packet. In the event that an IMSI or MSISDN match is located in the G-FLEX™ database, the appropriate routing data is returned by the G-FLEX™ database and the signaling message packet is modified accordingly before further routing. No secondary search of the block-based GTT database is required in such a case. However, in the event that no IMSI or MSISDN match is located in the G-FLEX™ database, a secondary search is performed in the range-based GTT database.

### G-FLEX™ Translation

Figures 6 and 7 generally illustrate the two routing database access scenarios briefly described above. More particularly, Figure 6 diagrams the case where the initial G-FLEX™ database lookup finds an IMSI or MSISDN match and hence no secondary GTT database search is required. To illustrate this case, the path of a typical HLR-bound SS7 signaling message is traced from the GMSC **348**, through the flexible routing node **302** and ultimately to the destination HLR C **356**, with the path being indicated by a dashed line in Figure 6. For the purposes of illustration, each of these network nodes has been assigned an SS7 network address or point code (PC). In both Figures 6 and 7, GMSC node **348** is identified by the PC 1-0-0, flexible routing node **302** is identified by PC 2-0-0, while the three HLR nodes **352, 354**, and **356** are identified by the PCs 3-0-1, 3-0-2, and 3-0-3, respectively.

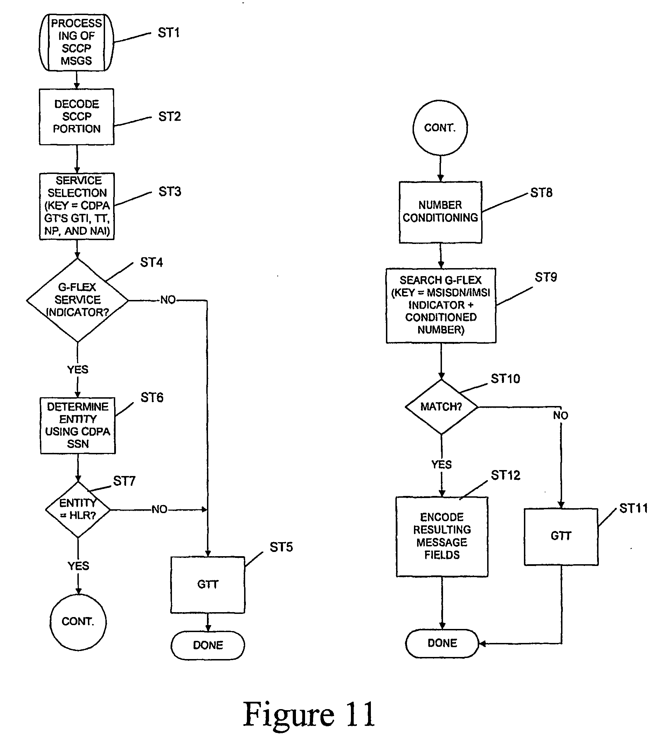

Beginning at the GMSC node **348**, a signaling message is formulated and transmitted to the flexible routing node **302** via the SS7 communication link **320**. The relevant data content of this originating signaling message is shown in Figure 10a. As such, it will be appreciated from the table presented in Figure 10a that the OPC of the original message is equal to 1-0-0, the PC of GMSC node **348**. The DPC of the message is 2-0-0, the PC of the flexible routing node **302**. The signaling message is received within the flexible routing node **302** by LIM **308**. SS7 MTP Level 1 and 2 processing is performed on the incoming signaling message packet by the MTP Level 1 and 2 process **310.** With MTP Level 1 and 2 processing complete, the signaling message packet is temporarily buffered in the I/O queue **312** before being passed up the stack to the MTP Level 3 HMDC process **314.** The HMDC process **314** examines the signaling message packet and determines whether the packet requires further processing at the flexible routing node **302**. In the example shown in Figure 6, it is assumed that the HMDC process **314** determines that further processing of the signaling message packet is required, and the packet is subsequently passed to the HMDT process **316**. The HMDT process **316** examines the packet and determines, based on the type of further processing that is required, which distributed processing module connected to the IMT bus **304** should next receive the packet. In this case, the HMDT process **316** determines that the signaling message should be forwarded to GDM module **322** for G-FLEX™ translation service. The signaling message packet is then placed on the high speed IMT bus **304** and sent to GDM **322**. A detailed flow chart of GDM/SCCP related processing steps is presented in Figure 11, and may be used in conjunction with the schematic diagram shown in Figure 6 to better understand the G-FLEX™ and GTT database lookup methodology. Furthermore, Figure 10a provides a summary of the contents of the signaling message packet before and after G-FLEX™ translation.

Referring to Figure 11, in step **ST1**, the signaling message arrives atthe GDM card **322** and SCCP process **326** receives the packet. Within SCCP . process **326**, the message packet is-passed to the SCRC controller process **328**. In steps **ST2** and **ST3**, respectively, the SCRC process **328** decodes and examines packet content information contained within the signaling message header in order to establish which type of translation service is required. More particularly, the RI, GTI, TT, NP, and NAI parameters contained within the signaling message packet are analyzed to determine whether a G-FLEX™ or a GTT translation service is required. As indicated in steps **ST4** and **ST5**, if it is determined that GTT translation service is required, the message is passed directly to the GTT database process **332**. However, in the scenario presented in Figure 6, an RI value of "RT-ON-GT", a GTI value of 4, a Translation Type (TT) value of 0, a "national" NAI value, and an "E.164" NP value, are collectively interpreted as indicating the need for a G-FLEX™ translation. The signaling message content is then further analyzed to determine the specific type of G-FLEX™ translation service required, as indicated by step **ST6**. More particularly, the CdPA SSN parameter is examined, and the value of 6 is interpreted as indicating the need for a G-FLEX™ HLR type translation. In this particular example, if the entity type of the destination node is determined to be anything other than an HLR (i.e., SSN not equal to 6), the packet is passed to the GTT database process **332** as shown in steps **ST7** and **ST5**, respectively. In step **ST8,** the mobile identification number (MIN) encoded within the packet is subsequently examined and conditioned, as necessary. The MIN is stored within the CdPA field in a structure commonly referred to as the Global Title Digits (GTD) sub-field. In this example, the MIN or GTD has a value of 9193803833, as shown in Figure 10a, and it is further assumed that no conditioning of this number is required.

However, with regard to the above mentioned number conditioning, such processing may be necessary to insure that the IMSI or MSISDN is compatible with the format of the key field data stored in the G-FLEX™ and GTT databases **330** and **332,** respectively. Number conditioning operations might include the pre-pending extra digits to a mobile identification number contained within a signaling message packet so as to force the number to conform to an international format. Conversion of a mobile identification number from one numbering standard to another may also be performed. For instance, the mobile identification number associated with an incoming signaling message packet may be converted from a first industry standard format known as E.214 to a second industry standard format known as E.212 prior to database lookup operations. Once again, it should be appreciated that such mobile identification number conditioning services are necessary only in the case that the format of the incoming message mobile identification number is not consistent with the corresponding key field data format in the G-FLEX ™ and GTT databases.

In step **ST9,** the G-FLEX™ database **330** is searched using the appropriate mobile identification number (IMSI or MSISDN) as at least a portion of the search key. If a match is not found in the G-FLEX™ database **330,** the packet is passed to the GTT database **332** for processing, as shown in steps **ST10** and **ST11**, respectively. However, in the example presented in Figure 6, a match is found in the G-FLEX™ database **330,** as indicated by the fact that there is an entry in the G-FLEX™ database **330** (Figure 9a) corresponding to the message's CdPA SSN value of 9193803833. The routing data returned by the G-FLEX™ database process **330,** a point code value of 3-0-3 and a subsystem number of 6, is subsequently encoded within the signaling message packet, as indicated by step **ST12**. It will be appreciated that the routing information, PC:3-0-3 SSN:6, returned by the G-FLEX™ database effectively constitutes the network address of HLR C **356.** It should also be appreciated that the Routing Indicator (RI) field of the translated signaling message has been modified from the original "Route-On-GT" value to a new value of "Route-On-SSN", indicating that no further routing address translations are required to identify the network address of the destination HLR node. Once again, the Routing Indicator parameter is well known to those skilled in the art of SS7 telecommunications, and consequently a detailed discussion of this parameter and it's routing functionality is not presented herein. It will be appreciated, however, that this parameter is used to generally indicate whether a signaling message packet requires SCCP type processing. It should also be noted in Figure 9a that two of the stored data fields are not used in this case. An Entity Address field is used to store an alias, typically an MSISDN or IMSI formatted number, that is representative of a particular HLR node. A Replace Called party Global Title digits (RCGT) field contains a flag that indicates whether the value in the CdPA:GTD field of the signaling message should be changed to reflect the Entity Address of the destination HLR node. In this case it will be appreciated that the RCGT flag is set to a value of "NO", indicating that the CdPA:GTD field of the signaling message need not be changed to reflect the Entity Address of HLR C. Such is typically the case, when the point code and subsystem information corresponding to the network address of a target HLR node is already known by the flexible routing node. If, however, the flexible routing node has not been provisioned with at least the point code corresponding to the destination HLR node, then an Entity Address substitution is employed to facilitate subsequent routing address translations by an external routing node. An example of such a scenario is provided below.

Returning now to Figure 6, it will be appreciated that following the successful G-FLEX™ database lookup as described in detail above, the modified signaling message packet is next passed to the HMRT process **334**. Once again, the HMRT process **334** determines to which LIM or DCM card the packet should be routed for subsequent transmission to the message's destination node. In this case, the HMRT process **334** determines that the link connecting the flexible routing node **302** and the modified message's destination node is located on DCM **336**. Consequently, the modified signaling message packet is internally routed across the IMT bus **304** to DCM **336**, where it is received by the HMCG process **340**. HMCG process **340** passes the modified message packet into the I/O queue **341,** while acknowledging this outbound packet's contribution to link congestion. Eventually, the modified message packet is passed from the I/O queue **341** and on to IP process **342**, where the SS7 packet is encapsulated within an IP routing envelope. The IP encapsulated SS7 packet is then transmitted into the associated IP network **350** via the IP signaling link **344**. In this example, the IP encapsulated SS7 packet is addressed and consequently routed through the IP network **350** to the final destination, HLR C **356**. The OPC of the packet is changed to the OPC of flexible routing node **302**.

### Default GTT Translation

Turning now to Figure 7, the example message flow scenario presented in this diagram illustrates the case where an initial G-FLEX™ database lookup fails to find an IMSI or MSISDN match and hence a secondary or default GTT database search is required. The path of a typical HLR-bound SS7 signaling message is traced from the GMSC **348**, through the flexible routing node **302** and ultimately to the destination HLR B **354.** Once again, the signaling message pathway is indicated by a dashed line. Beginning at the GMSC node **348**, a signaling message is formulated and transmitted to the flexible routing node **302** via the SS7 communication link **320**. The relevant data content of this originating signaling message is shown in Figure 10b. As such, it will be appreciated from the table presented in Figure 10b that the OPC of the original message is equal to 1-0-0, the PC of GMSC node **348**. The DPC of the message is 2-0-0, the PC of the flexible routing node **302**.

As processing of the incoming signaling message packet on the LIM **308** in this scenario is identical to that described for the scenario illustrated in Figure 6 and described above, a detailed discussion of LIM processing will not be repeated. Instead, it will be appreciated that the incoming signaling message is received within the flexible routing node **302** by LIM **308** and that the message packet is subsequently examined and routed via IMT bus **304** to GDM card **322** for further processing.

The detailed flow chart of GDM/SCCP related processing steps presented in Figure 11 can be used in conjunction with the schematic diagram shown in Figure 7 to better understand the G-FLEX™ and GTT database lookup methodology. Furthermore, Figure 10b provides a summary of the contents of the signaling message packet before and after G-FLEX™ translation. Referring to Figure 11, in step **ST1**, the signaling message arrives at the GDM card **322** and SCCP process **326** receives the packet. Within SCCP process **326**, the message packet is passed to the SCRC controller process **328**. In steps **ST2** and **ST3**, respectively, the SCRC process **328** decodes and examines packet content information contained within the signaling message header in order to establish which type of translation service is required. More particularly, the RI, GTI, TT, NP, and NAI parameters contained within the signaling message packet are analyzed to determine whether a G-FLEX™ or a GTT translation service is required. Once again, as in the preceding example, a RI value of "RT-ON-GT", a GTI value of 4, a TT value of 0, a "national" NAI value, and an "E.164" NP value, are collectively interpreted as indicating the need for a G-FLEX™ translation. The signaling message content is then further analyzed to determine the specific type of G-FLEX™ translation service required, as indicated by step **ST6.** More particularly, the CdPA SSN parameter is examined, and the value of 6 is interpreted as indicating the need for a G-FLEX™ HLR type translation. In step **ST8,** the mobile identification number (MIN) encoded within the packet is subsequently examined and conditioned, as necessary. In this example, the MIN or GTD has a value of 7707883438, as shown in Figure 10b, and it is further assumed that no conditioning of this number is required.

In step **ST9,** the G-FLEX™ database **330** is searched using the appropriate mobile identification number (IMSI or MSISDN) as at least a portion of the search key. In this case, a match is not found in the G-FLEX™ database **330** and the packet is passed to the GTT database **332** for further processing, as shown in step **ST10**. It will be appreciated that this GTT default processing is indicated by the fact that there is not an entry in the G-FLEX™ database **330** (Figure 9a) corresponding to the message's CdPA SSN value of 7707883438. Consequently, in step **ST10**, the GTT database **332** is searched using the mobile identification number, 7707883438, as at least a portion of the search key. As indicated in Figure 9b, a MIN range is defined in the GTT database **332** which bounds the searched MIN, 7707883438. The routing data returned by the GTT database process **332**, a point code value of 3-0-2 and a subsystem number of 6, is subsequently encoded within the signaling message packet, as indicated by step **ST12**. It will be appreciated that the routing information, PC:3-0-2 SSN:6, returned by the GTT database **332** effectively constitutes the network address of HLR B 354. It should also be appreciated that the Routing Indicator (RI) field of the translated signaling message has been modified from the original "Route-On-GT" value to a new value of "Route-On-SSN".

Returning now to Figure 7, it will be appreciated that following the unsuccessful G-FLEX™ and successful GTT database lookup sequence as described in detail above, the modified signaling message packet is next passed to the HMRT process **334**. Once again, the HMRT process **334** determines to which LIM or DCM card the packet should be routed for subsequent transmission to the message's destination node. In this case, the HMRT process **334** determines that the link connecting the flexible routing node **302** and the modified message's destination node is located on DCM **336**. Consequently, the modified signaling message packet is internally routed across the IMT bus **304** to DCM **336**, where it is received by the HMCG process **340**. HMCG process **340** passes the modified message packet into the I/O queue **341,** while acknowledging this outbound packet's contribution to link congestion. Eventually, the modified message packet is passed from the I/O queue **341** and on to IP process **342,** where the SS7 packet is encapsulated within an IP routing envelope. The destination IP address in the routing envelop can be determined by database lookup in the DCM for the IP address corresponding to point code 3-0-2. The IP encapsulated SS7 packet is then transmitted into the associated IP network **350** via the IP signaling link **344**. In this example, the IP encapsulated SS7 packet is addressed and consequently routed through the IP network **350** to the final destination, HLR B **354**.

As stated above, the IP network **350** illustrated in Figure 7 may be replaced by an SS7 network without departing from the scope of the invention. In such a scenario, the DCM **336** can be replaced by a second LIM for routing outgoing SS7 messages over an SS7 network. In a method for routing a signaling message according to such an embodiment, the steps for routing the signaling message are the same as those described above prior to distribution of the message to the DCM **336,** as described above. However, when the DCM **336** is replaced by a LIM, rather than encapsulating the signaling message in an IP packet, the signaling message is simply routed to HLR B **354** according to the destination point code of the message. The outgoing signaling message has an OPC equal to the point code of flexible routing node **302** and a DPC equal to the point code of HLR B **354**. Because the OPC of the signaling message is changed to the point code of flexible routing node **302**, rather than that of the GMSC **348**, compliance with SS7 network reliability procedures is maintained.

### Intermediate Translation

Another example, presented in Figure 8, is intended to illustrate an alternate network implementation in which it is possible for a flexible routing node of the present invention to provide an intermediate routing translation. In this implementation, signaling network **400** includes a flexible routing node **402,** which is substantially identical in form and function to the flexible routing node **302** described above and generally illustrated in Figures 6 and 7. Flexible routing node **402** is coupled to GMSC **348** and the three HLR nodes **352, 354**, and **356** via at least one intermediate STP **404**. The communication link **406** between flexible routing node **402** and STP **404** is an SS7 link, although other communication protocols, such as IP, could also be employed.

In this scenario, the path of a typical HLR-bound SS7 signaling message is traced from the GMSC **348**, through the flexible routing node **402** and ultimately to the destination node, HLR A **352**. Once again, the signaling message pathway is indicated by a dashed line. The relevant data content of this signaling message as it is first received and then translated by the flexible routing node **402** is shown in Figure 10c. Beginning at the GMSC node **348**, a signaling message with a CdPA:GTD value of 2125662322 is formulated and transmitted to the intermediate STP **404**. STP **404** receives and routes the signaling message on to the flexible routing node **402** via communication link **406**. Although not shown in Figure 10c, it will be appreciated that the OPC of the original message is equal to 1-0-0, the PC of GMSC node **348**, while the DPC of the original message is 4-0-0, the PC of the STP **404**. In the process of routing the message packet, STP **404** modifies the OPC to 4-0-0 and the DPC to 2-0-0. The message is then transmitted by STP **404** to the flexible routing node **402**, which is assigned the point code 2-0-0. Once the signaling message is received by the flexible routing node **402**, processing of the message is essentially the same as that described above for the previous examples.

The only significant difference in this case is that the routing data returned by the G-FLEX™ database lookup is not the point code and SSN of the target HLR A node **352,** but is instead the Entity Address associated with HLR A **352** and the point code of STP **404.** More particularly, a Replace Called party Global Title digits (RCGT) value of "YES" is returned by the G-FLEX™ database as indicated in Figure 9a, along with an HLR A Entity Address value of 1013211234. Consequently, the original value of the CdPA:GTD field of the signaling message, 2125662322, is replaced by the HLR A Entity Address value of 1013211234.

A second key distinction from the previous example scenarios is that the CdPA routing indicator of the translated message is setto "RT-ON-GT" instead of "RT-ON-SSN", thereby indicating that a least one more routing address translation will be required to determine the actual network address of the destination HLR node.

Those skilled in the art of SS7 routing systems will appreciate that such a translation is very similar in form and function to an intermediate global title translation. As such, it is implied that the G-FLEX™ and GTT databases contained within flexible routing node **402** do not have the information necessary to identify the actual network address of the target destination node. However, the G-FLEX™ database is populated with information relating to the next network routing node that might have the actual network address of the target destination node. As indicated in Figures 8, 9a and 10c, the result of the G-FLEX™ database lookup indicates that the signaling message packet should be next routed to STP **404** at PC: 4-0-0. Furthermore, the routing indicator of the translated message is set to a value of "RT-ON-GT", indicating that a final routing translation is still required before the message packet can reach it's target destination. In this example, it is assumed that STP **404** is configured to perform a successful final GTT on the message packet using the Entity Address of HLR A that has been stored in the CdPA:GTD field of the signaling message. Following this final GTT translation at STP **404**, the DPC of the message packet is changed to 3-0-1:6, and the message is subsequently transmitted to the network element corresponding to this PC and SSN, namely HLR A **352**. The OPC of the message is changed to 4-0-0; that is, the OPC of the STP **404**.

As alluded to previously, one significant distinction that the flexible routing node of the present invention has over prior art solutions involves the manner in which the OPC field of the SS7 MTP routing label is altered during the G-FLEX™ or GTT translation process. More particularly, as part of the G-FLEX™ and GTT processing, the OPC of the translated signaling message is modified to reflect the point code of the flexible routing node. This distinction is significant in that it enables industry standard SS7 level 3 and above network management protocols to operate in compliance with accepted SS7 telecommunications standards as defined by ANSI, ITU, Telcordia, and others.

It will be understood that various details of the invention may be changed without departing from the scope of the invention. Furthermore, the foregoing description is for the purpose of illustration only, and not for the purpose of limitation--the invention being defined by the claims.

## Claims

1. A routing element (302) for routing a signaling message through a communications network including a mobile switching center (348) capable of routing signaling messages to HLRs (352, 354, 356) based on ranges of mobile identification numbers and a plurality of HLRs (352, 354, 356) storing subscription data for individual subscribers, the routing element (302) comprising:
(a) a communication module (308) located within the routing element (302) for receiving a signaling message from the mobile switching center (348);
(b) a range-based database (332) containing entries for routing signaling messages to the HLRs (352, 354, 356) the entries being indexed by ranges or blocks of mobile identification numbers;
(c) an exception-based database (330) located within the routing element (302) and containing entries for routing signaling messages to the HLRs (352, 354, 356) the entries being indexed by individual mobile identification numbers; and
(d) a database subsystem controller (328) located within the routing element (302) for accessing at least one of the range- and exception-based databases (332 and 330) to extract routing information for routing the signaling message to one of the HLRs (352, 354, 356) and **characterized in that**:
(i) the database subsystem controller (328) is adapted to initially direct the signaling message to the exception-based database (330) and perform a lookup in the exception-based database (330) based on a mobile identification number in the signaling message to locate the routing information;
(ii) the database subsystem controller is adapted to direct the signaling message to the range-based database in response to failing to locate the routing information in the exception-based database; and
(iii) the database subsystem controller (328) is adapted to incorporate the routing information returned from the range or exception-based database (332 or 330) into the signaling message.

2. The routing element (302) of claim 1 **characterized in that** the communication module (308) is a signaling system 7 SS7 Link Interface Module LIM or an IP data communications module DCM.

3. The routing element (302) of claim 1 **characterized in that** the entries in the exception-based database (330) are indexed by mobile identification numbers that are exceptions to the ranges of mobile identification numbers.

4. The routing element (302) of claim 1 **characterized in that** each entry in the exception-based database includes an SS7 point code or an IP address.

5. The routing element (302) of claim 1 **characterized in that** each entry in the exception-based database includes an entity address.

6. The routing element (302) of claim 1 **characterized in that** each entry in the range-based database includes an entity address.

7. The routing element (302) of claim 1 **characterized in that** each entry in the range-based database includes an SS7 point code or an IP address.

8. The routing element (302) of claim 1 **characterized in that** the database subsystem controller is adapted to perform number conditioning operations on contents of the signaling message prior to accessing the range- or exception-based database (332 or 330).

9. The routing element (302) of claim 1 **characterized in that** the database subsystem controller (328) is adapted to determine an entity type for a destination of the signaling message prior to accessing the range- or exception-based database (332 or 330).

10. The routing element (302) of claim 1 **characterized in that** the signaling message comprises an SS7 signaling message.

11. The routing element (302) of claim 1 **characterized in that** the signaling message comprises an Interim Standard-41 IS-41 protocol message or a GSM MAP message.

12. The routing element (302) of claim 1 **characterized in that** the communications network comprises a Signaling System 7 SS7 network, an IP network, or an ATM network.

13. The routing element (302) of claim 1 **characterized in that** the identification number extracted from the signaling message is a mobile identification number.

14. The routing element (302) of claim 13 **characterized in that** the mobile identification number extracted from the signaling message is an International Mobile Subscriber Identity IMSI number, a Mobile Station Integrated Services Digital Network MSISDN number, a Mobile Global Title number, an ANSI-41 Mobile Identification Number, or an ANSI-41 Mobile Directory Number.

15. The routing element (302) of claim 1 **characterized in that** the routing information incorporated into the signaling message includes a point code PC or an IP address.

16. The routing element (302) of claim 1 **characterized in that** the routing information incorporated into the signaling message includes at least one of an entity address, a routing indicator, and a subsystem number SSN.

17. The routing element (302) of claim 1 **characterized in that** at least one of the mobile identification numbers by which the entries in the exception-based database are indexed is outside of the blocks or ranges of mobile identification numbers by which the entries in the range-based database are indexed.

18. A method for routing a signaling message in a mobile communications network having an MSC (348) with range-based HLR routing capabilities and a plurality of HLRs (352, 354, 356) storing subscription information for mobile subscribers, the method characterizing:
(a) receiving a signaling message from the MSC (348);
(b) performing a primary search of an exception-based database (330) using an identification number contained within the signaling message, the exception-based database (330) including entries indexed by individual mobile identification numbers and storing routing information for routing signaling messages to the HLRs (352, 354, 356);
(c) in response to failing to locate an entry corresponding to the identification number in the exception-based database, performing a secondary search of a range-based database (332) using the identification number contained in the signaling message, the range-based database (332) including entries indexed by ranges of mobile identification numbers and storing routing information for routing signaling messages to the HLRs (352, 354, 356);
(d) modifying the signaling message to include routing address information extracted from the exception-based or the range-based database (332 or 330); and
(e) transmitting the modified signaling message to one of the HLRs (352, 354, 356).

19. The method of claim 18 **characterized in that** the signaling message comprises an SS7 signaling message.

20. The method of claim 18 **characterized in that** the signaling message comprises an Interim Standard-41 IS-41 protocol message or a GSM MAP message.

21. The method of claim 18 **characterized in that** the communications network comprises a Signaling System 7 SS7 network, an IP network, or an ATM network.

22. The method of 18 **characterized in that** the identification number extracted from the signaling message is a mobile identification number.

23. The method of claim 22 **characterized in that** the mobile identification number extracted from the signaling message is an International Mobile Subscriber Identity IMSI number, a Mobile Station Integrated Services Digital Network MSISDN number, a Mobile Global Title number, an ANSI-41 Mobile Identification Number, or an ANSI-41 Mobile Directory Number.

24. The method of claim 18 **characterized in that** the routing information incorporated into the signaling message includes a point code PC or an IP address.

25. The method of claim 18 **characterized in that** the routing information incorporated into the signaling message includes at least one of an entity address, a routing indicator, and a subsystem number SSN.

26. The method of claim 18 characterizing determining whether received signaling messages require a routing address translation.

27. The method of claim 26 **characterizing, in** response to determining that the signaling messages require a routing address translation, determining a type of routing address translation required for the signaling messages.

28. The method of claim 27 **characterized in that** determining a type of routing address translation includes determining a type of Global System for Mobile Communications GSM or American National Standards Institute ANSI-41 network element to which the signaling messages are to be routed.

29. The method of claim 28 **characterized in that** determining a type of GSM or ANSI-41 network element includes determining whether to route the signaling messages to a Home Location Register HLR, an Equipment Identification Register EIR, an Authentication Center AuC, or a service control point SCP.

30. The method of claim 26 **characterized in that** determining whether the received signaling messages require a routing address translation includes examining field values in a signaling connection control part SCCP called party address CdPA portion of the signaling messages.

31. The method of claim 30 **characterized in that** the examining fields in the SCCP CdPA portion of the signaling messages includes examining a Subsystem Number SSN field, a Translation Type TT field, a Global Title Indicator GTI field, a numbering plan NP field, and a Nature of Address Indicator NAI field.

32. The method of claim 30 **characterized in that** determining whether a data packet requires a routing address translation includes examining values in a Transaction Capabilities Application Part TCAP portion of the data packet.

33. The method of claim 18 **characterized in that**:
(a) receiving a signaling message from the MSC (348) comprises receiving, at a network routing node (302) having a first point code, a signaling message having an originating point code OPC equal to a second point code corresponding to the MSC (348); and
(b) transmitting the modified signaling message to one of the HLRs (352, 354, 356) comprises inserting the first point code in the OPC field of the modified signaling message.

34. The method of claim 33 **characterized in that** receiving a signaling message from an MSC (348) comprises receiving a Signaling System 7 SS7 signaling message over an SS7 network.

35. The method of claim 33 **characterized in that** transmitting the modified signaling message to one of the HLRs (352, 354, or 356) comprises transmitting a Signaling System 7 SS7 signaling message over an SS7 network.

36. The method of claim 33 **characterized in that** modifying the signaling message to include routing address information includes modifying the signaling message to include a destination point code DPC value corresponding to one of the HLRs (352, 354, 356).

37. The method of claim 18 **characterized in that** at least one of the individual mobile identification numbers in the exception-based database is outside of the ranges of mobile identification numbers in the range-based database.

## Patentansprüche

1. Routingelement (302) zum Routen einer Signalisierungsnachricht durch ein Kommunikationsnetzwerk, welches eine Mobilfunk-Vermittlungsstelle enthält, die zum Routen von Signalisierungsnachrichten basierend auf Bereichen von Mobilfunk-Identifikationsnummern und einer Vielzahl von HLR-Registern (352, 354, 356), die Subskriptionsdaten für individuelle Teilnehmern speichern, geeignet ist, wobei das Routingelement (302) aufweist:
(a) ein Kommunikationsmodul (308), welches innerhalb des Routingelementes (302) zum Empfangen einer Signalisierungsnachricht von der Mobilfunk-Vermittlungsstelle (348) angeordnet ist;
(b) eine bereichsbezogene Datenbank (332), welche Einträge zum Routen der Signalisierungsnachrichten zu den HLR-Registern (352, 354, 356) enthält, wobei die Einträge durch Bereiche oder Blöcke der Mobilfunk-Identifikationsnummern indiziert sind;
(c) eine ausnahmebezogene Datenbank (330), welche innerhalb des Routingelementes (302) angeordnet ist und Einträge zum Routen der Signalisierungsnachrichten zu den HLR-Registem (352, 354, 356) enthält, wobei die Einträge durch individuelle Mobilfunk-Identifikationsnummern indiziert sind; und
(d) eine Datenbank-Subsystem-Steuereinrichtung (328), welche innerhalb des Routingelementes (302) zum Zugreifen auf wenigstens eine der bereichsbezogenen und ausnahmebezogenen Datenbanken (332 und 330) angeordnet ist, um Routinginformationen zum Routen der Signalisierungsnachricht zu einem der HLR-Register (352, 354, 356) zu extrahieren, und **dadurch gekennzeichnet ist, dass**:
(i) die Datenbank-Subsystem-Steuereinrichtung (328) dazu geeignet ist, um anfangs die Signalisierungsnachricht zu der ausnahmebezogenen Datenbank (330) zu leiten und ein Nachschlagen in der ausnahmebezogenen Datenbank (330) basierend auf einer Mobilfunk-Identifikationsnummer in der Signalisierungsnachricht durchzuführen, um die Routinginformation zu lokalisieren;
(ii) die Datenbank-Subsystem-Steuereinrichtung (328) dazu geeignet ist, die Signalisierungsnachricht zu der bereichsbezogenen Datenbank (332) als Antwort auf ein Fehlschlagen des Lokalisierens der Routinginformation in der ausnahmebezogenen Datenbank (330) zu leiten; und
(iii) die Datenbank-Subsystem-Steuereinrichtung (328) dazu geeignet ist, die Routinginformation, welche von der bereichsbezogenen oder ausnahmebezogenen Datenbank (332 oder 333) zurückgekommen ist, in die Signalisierungsnachricht einzubauen.

2. Routingelement (302) nach Anspruch 1,
**dadurch gekennzeichnet,**
**dass** das Kommunikationsmodul (308) ein Signalisierungssystem-7(SS7)-Linkschnittstellenmodul (LIM) oder ein IP-Datenkommunikationsmodul (DCM) ist.

3. Routingelement (302) nach Anspruch 1,
**dadurch gekennzeichnet,**
**dass** die Einträge in die ausnahmebezogene Datenbank (330) durch Mobilfunk-Identifikationsnummern indiziert werden, die Ausnahmen zu den Bereichen der Mobilfunk-Identifikationsnummern sind.

4. Routingelement (302) nach Anspruch 1,
**dadurch gekennzeichnet,**
**dass** jeder Eintrag in der ausnahmebezogenen Datenbank (330) einen SS7-Punktcode oder eine IP-Adresse enthält.

5. Routingelement (302) nach Anspruch 1,
**dadurch gekennzeichnet,**
**dass** jeder Eintrag in der ausnahmebezogenen Datenbank eine Entitätsadresse enthält.

6. Routingelement (302) nach Anspruch 1,
**dadurch gekennzeichnet,**
**dass** jeder Eintrag in der bereichsbezogenen Datenbank eine Entitätsadresse enthält.

7. Routingelement (302) nach Anspruch 1,
**dadurch gekennzeichnet,**
**dass** jeder Eintrag in der bereichsbezogenen Datenbank einen SS7-Punktcode oder eine IP-Adresse enthält.

8. Routingelement (302) nach Anspruch 1,
**dadurch gekennzeichnet,**
**dass** die Datenbank-Subsystem-Steuereinrichtung (328) dazu geeignet ist, Nummernaufbereitungsoperationen auf den Inhalten der Signalisierungsnachricht vor dem Zugreifen auf die bereichsbezogene oder ausnahmebezogene Datenbank (332 oder 330) durchzuführen.

9. Routingelement (302) nach Anspruch 1,
**dadurch gekennzeichnet,**
**dass** die Datenbank-Subsystem-Steuereinrichtung (328) dazu geeignet ist, einen Entitätstyp für ein Ziel der Signalisierungsnachricht vor dem Zugreifen auf die bereichsbezogene oder ausnahmebezogene Datenbank (332 oder 330) zu bestimmen.

10. Routingelement (302) nach Anspruch 1,
**dadurch gekennzeichnet,**
**dass** die Signalisierungsnachricht eine SS7-Signalisierungsnachricht aufweist.

11. Routingelement (302) nach Anspruch 1,
**dadurch gekennzeichnet,**
**dass** die Signalisierungsnachricht eine Interim-Standard-41(IS41)-Protokollnachricht oder eine GSM-MAP-Nachricht enthält.

12. Routingelement (302) nach Anspruch 1,
**dadurch gekennzeichnet,**
**dass** das Kommunikationsnetzwerk ein Signalisierungssystem-7(SS7)-Netzwerk, ein IP-Netzwerk oder ein ATM-Netzwerk aufweist.

13. Routingelement (302) nach Anspruch 1,
**dadurch gekennzeichnet,**
**dass** die aus der Signalisierungsnachricht extrahierte Identifikationsnummer eine Mobilfunk-Identifikationsnummer ist.

14. Routingelement (302) nach Anspruch 13,
**dadurch gekennzeichnet,**
**dass** die aus der Signalisierungsnachricht extrahierte Mobilfunk-Identifikationsnummer eine internationale Mobilfunk-Teilnehmer-Identitätsnummer (IMSI), eine Mobilfunkstations-Dienstintegrierende-Digitale-Netzwerk-Nummer (MSISDN), eine Mobilfunk-Globaler-Titel-Nummer, eine ANSI-41-Mobilfunk-Identifikationsnummer oder eine ANSI-41-Mobilfunkverzeichnisnummer ist.

15. Routingelement (302) nach Anspruch 1,
**dadurch gekennzeichnet,**
**dass** die in der Signalisierungsnachricht eingebaute Routinginformation einen Punktcode (PC) oder eine IP-Adresse enthält.

16. Routingelement (302) nach Anspruch 1,
**dadurch gekennzeichnet,**
**dass** die in der Signalisierungsnachricht eingebaute Routinginformation zumindest eine Entitätsadresse, einen Routingindikator oder eine Subsystem-Nummer (SSN) enthält.

17. Routingelement (302) nach Anspruch 1,
**dadurch gekennzeichnet,**
**dass** zumindest eine der Mobilfunk-Identifikationsnummern, durch welche die Einträge in der ausnahmebezogenen Datenbank indiziert sind, außerhalb der Blocks oder der Bereiche der Mobilfunk-Identifikationsnummern liegt, durch welche die Einträge in der ausnahmebezogenen Datenbank indiziert sind.

18. Verfahren zum Routen einer Signalisierungsnachricht in einem Mobilfunk-Kommunikationsnetzwerk, welches eine Mobilfunk-Vermittlungsstelle (348) mit bereichsbezogenen HLR-Routing-Ressourcen und eine Vielzahl von HLR-Registern (352, 354, 356), die eine Subskriptionsinformation für Mobilfunk-Teilnehmer speichern, aufweist, wobei das Verfahren durch folgende Verfahrensschritte gekennzeichnet ist:
(a) Empfangen einer Signalisierungsnachricht von der Mobilfunk-Vermittlungsstelle (348);
(b) Durchführen einer Anfangssuche einer ausnahmebezogenen Datenbank (330) anwendend eine Identifikationsnummer, welche innerhalb der Signalisierungsnachricht enthalten ist, wobei die ausnahmebezogene Datenbank (330) Einträge enthält, die durch individuelle Mobilfunk-Identifikationsnummern indiziert sind, und eine Routinginformation zum Routen der Signalisierungsnachrichten zu den HLR-Registern (352, 354, 356) speichert;
(c) als Antwort auf ein Fehlschlagen des Lokalisierens eines Eintrags entsprechend der Identifikationsnummer in der ausnahmebezogenen Datenbank, Durchführen einer zweiten Suche einer bereichsbezogenen Datenbank (332) anwendend die in der Signalisierungsnachricht enthaltene Identifikationsnummer, wobei die bereichsbezogene Datenbank (332) Einträge enthält, die durch Bereiche der Mobilfunk-Identifikationsnummern indiziert sind und eine Routinginformation für das Routen der Signalisierungsnachrichten zu den HLR-Registern (352, 354, 356) speichert;
(d) Modifizieren der Signalisierungsnachricht, um eine Routingadressinformation einzufügen, die von der ausnahmebezogenen oder der bereichsbezogenen Datenbank (332 oder 330) extrahiert ist; und
(e) Übertragen der modifizierten Signalisierungsnachricht zu einem der HLR-Register (352, 354, 356).

19. Verfahren nach Anspruch 18,
**dadurch gekennzeichnet,**
**dass** die Signalisierungsnachricht eine SS7-Signalisierungsnachricht aufweist.

20. Verfahren nach Anspruch 18,
**dadurch gekennzeichnet,**
**dass** die Signalisierungsnachricht eine Interim-Standard-41(IS41)-Protokollnachricht oder eine GSM-MAP-Nachricht aufweist.

21. Verfahren nach Anspruch 18,
**dadurch gekennzeichnet,**
**dass** das Kommunikationsnetzwerk ein Signalisierungssystem-7(SS7)-Netzwerk, ein IP-Netzwerk oder ein ATM-Netzwerk aufweist.

22. Verfahren nach Anspruch 18,
**dadurch gekennzeichnet,**
**dass** die aus der Signalisierungsnachricht extrahierte Identifikationsnummer eine Mobilfunk-Identifikationsnummer ist.

23. Verfahren nach Anspruch 22,
**dadurch gekennzeichnet,**
**dass** die aus der Signalisierungsnachricht extrahierte Mobilfunk-Identifikationsnummer eine internationale Mobilfunk-Teilnehmer-Identitätsnummer (IMSI), eine Mobilfunkstations-Dienstintegrierende-Digitale-Netzwerk-Nummer (MSISDN), eine Mobilfunk-Globaler-Titel-Nummer, eine ANSI-41-Mobilfunk-Identifikationsnummer oder eine ANSI-41-Mobilfunkverzeichnisnummer ist.

24. Verfahren nach Anspruch 18,
**dadurch gekennzeichnet,**
**dass** die in der Signalisierungsnachricht eingebaute Routinginformation einen Punktcode (PC) oder eine IP-Adresse enthält.

25. Verfahren nach Anspruch 18,
**dadurch gekennzeichnet,**
**dass** die in der Signalisierungsnachricht eingebaute Routinginformation wenigstens eine Entitätsadresse, einen Routingindikator oder eine Subsystem-Nummer (SSN) enthält.

26. Verfahren nach Anspruch 18,
**gekennzeichnet durch** ein Bestimmen, ob die empfangenen Signalisierungsnachrichten eine Routing-Adressen-Übersetzung erfordern.

27. Verfahren nach Anspruch 26,
**gekennzeichnet durch** ein Bestimmen eines Typs einer Routing-Adressen-Übersetzung, die für die Signalisierungsnachrichten erforderlich ist, als Antwort auf das Bestimmen, dass die Signalisierungsnachrichten eine Routing-Adressen-Übersetzung erfordern.

28. Verfahren nach Anspruch 27,
**dadurch gekennzeichnet,**
**dass** das Bestimmen eines Typs einer Routing-Adressen-Übersetzung ein Bestimmen eines Typs des globalen Systems für ein Mobilfunkkommunikation-(GSM) oder ein Amerikanisches-Institut-Für-Nationale-Standards (ANSI)-Netzwerkelement (41), zu welchem die Signalisierungsnachrichten geroutet werden sollen, beinhaltet.

29. Verfahren nach Anspruch 28,
**dadurch gekennzeichnet,**
**dass** das Bestimmen eines Typs eines GSM- oder ANSI-Netzwerkelementes (41) ein Bestimmen beinhaltet, ob die Signalisierungsnachrichten zu einem HLR-Register (HLR), einem Ausrüstungsidentifikationsregister (EIR), einem Authentifizierungszentrum (AuC) oder zu einem Dienstekontrollpunkt (SCP) zu routen ist.

30. Verfahren nach Anspruch 26,
**dadurch gekennzeichnet,**
**dass** das Bestimmen, ob die empfangenen Signalisierungsnachrichten eine Routing-Adressen-Übersetzung erfordern, ein Bestimmen der Feldwerte in einem Signalisierungs-Verbindungs-Steuerteil (SCCP), welches Teilnehmeradressenteil (CdPA) der Signalisierungsnachrichten genannt wird, enthält.

31. Verfahren nach Anspruch 30,
**dadurch gekennzeichnet,**
**dass** das Prüfen der Felder in dem SCCP-CdPA-Teil der Signalisierungsnachrichten ein Prüfen eines Subsystem-Nummernfeldes (SSN), eines Übersetzungstypfeldes (TT), eines Globalen-Titel-Indikator-Feldes (GTI), eines Nummerierungs-Planfeldes (NP) und eines Adressen-Charakter-Indikator-Feldes (NAI) enthält.

32. Verfahren nach Anspruch 30,
**dadurch gekennzeichnet,**
**dass** das Bestimmen, ob ein Datenpaket eine Routing-Adressen-Übersetzung erfordert, ein Prüfen der Werte in einem Transaktions-Ressourcen-Applikationsteil(TCAP)-Anteil des Datenpakets enthält.

33. Verfahren nach Anspruch 18,
**dadurch gekennzeichnet, dass**:
(a) das Empfangen einer Signalisierungsnachricht von der Mobilfunk-Vermittlungsstelle (348) ein Empfangen einer Signalisierungsnachricht, die einen Herkunfts-Punktcode (UPC) gleich einem zweiten Punktcode entsprechend der Mobilfunk-Vermittlungsstelle (348), besitzt, an einem Netzwerk-Routing-Knoten (302), der einen ersten Punktcode besitzt, aufweist; und
(b) das Übertragen der modifizierten Signalisierungsnachricht zu einem der HLR-Register (352, 354, 356) ein Einfügen des ersten Punktcodes in das OPC-Feld der modifizierten Signalisierungsnachricht aufweist.

34. Verfahren nach Anspruch 33,
**dadurch gekennzeichnet,**
**dass** das Empfangen einer Signalisierungsnachricht von der Mobilfunk-Vermittlungsstelle (348) ein Empfangen einer Signalisierungs-System-7(SS7)-Signalisierungsnachricht über ein SS7-Netzwerk aufweist.

35. Verfahren nach Anspruch 33,
**dadurch gekennzeichnet,**
**dass** das Übertragen der modifizierten Signalisierungsnachricht zu einem der HLR-Register (352, 354, 356) ein Übertragen einer Signalisierungssystem-7(SS7)-Signalisierungsnachricht über ein SS7-Netzwerk aufweist.

36. Verfahren nach Anspruch 33,
**dadurch gekennzeichnet,**
**dass** das Modifizieren der Signalisierungsnachricht, um die Routing-Adressen-Information einzufügen, ein Modifizieren der Signalisierungsnachricht enthält, um einen Ziel-Punktcode(DPC)-Wert entsprechend einem der HLR-Register (352, 354, 356) einzufügen.

37. Verfahren nach Anspruch 18,
**dadurch gekennzeichnet,**
**dass** wenigstens eine der individuellen Mobilfunk-Identißkationsnummern in der ausnahmebezogenen Datenbank außerhalb des Bereiches der Mobilfunk-Identifikationsnummern der bereichsbezogenen Datenbank ist.

## Revendications

1. Élément d'acheminement (302) destiné à acheminer un message de signalisation dans un réseau de communication mobile comprenant un centre de commutation mobile (348) pouvant acheminer des messages de signalisation vers des enregistreurs de localisation nominale HLR (352, 354, 356) sur la base des séries de numéros d'identifiants mobiles et une pluralité de HLR (352, 354, 356) stockant des données d'abonnement pour les abonnés individuels, l'élément d'acheminement (302) comprenant
(a) un module de communication (308) situé à l'intérieur de l'élément d'acheminement (302) destiné à recevoir un message de signalisation en provenance d'un centre de communication mobile (348) ;
(b) une base de données (332) reposant sur des séries et contenant des entrées destinées à acheminer des messages de signalisation vers les HLR (352, 354, 356), les entrées étant indexées par des séries ou blocs de numéros d'identifiants mobiles ;
(c) une base de données (330) reposant sur des exceptions, située à l'intérieur de l'élément d'acheminement (302) et contenant des entrées destinées à acheminer des messages de signalisation vers les HLR (352, 354, 356), les entrées étant indexées par des numéros d'identification mobiles individuels ; et
(d) un contrôleur de sous-système de base de données (328) situé à l'intérieur de l'élément d'acheminement (302) et destiné à accéder à au moins l'une des bases de données reposant sur des séries et sur des exceptions (332 et 330) afin d'extraire les informations d'acheminement destinées à acheminer le message de signalisation vers l'un des HLR (352, 354, 356) et **caractérisé en ce que** :
(i) le contrôleur de sous-système de base de données (328) est conçu pour envoyer initialement le message de signalisation vers la base de données (330) reposant sur des exceptions et pour consulter la base de données (330) reposant sur des exceptions en se basant sur un numéro d'identification mobile du message de signalisation pour localiser les informations d'acheminement ;
(ii) le contrôleur de sous-système de base de données est conçu pour envoyer le message de signalisation vers la base de données reposant sur des séries en réponse à l'échec de localisation les informations d'acheminement dans la base de données reposant sur des exceptions ; et
(iii) le contrôleur de sous-système de base de données (328) est conçu pour incorporer des informations d'acheminement provenant de la base de données reposant sur des séries ou sur des exceptions (332 ou 330) dans le message d'acheminement.

2. Élément d'acheminement (302) selon la revendication 1, **caractérisé en ce que** le module de communication (308) est un système de signalisation utilisant le protocole SS7 Module d'interface de liaison LIM ou bien un module de communication de données IP DCM.

3. Élément d'acheminement (302) selon la revendication 1, **caractérisé en ce que** les entrées de la base de données (330) reposant sur des exceptions sont indexées par des numéros d'identifiants mobiles qui sont des exceptions aux séries de numéros d'identifiants mobiles.

4. Élément d'acheminement (302) selon la revendication 1, **caractérisé en ce que** chaque entrée de la base de données reposant sur des exceptions comprend un code de point SS7 ou une adresse IP.

5. Élément d'acheminement (302) selon la revendication 1, **caractérisé en ce que** chaque entrée de la base de données reposant sur des exceptions comprend une adresse d'entité.

6. Élément d'acheminement (302) selon la revendication 1, **caractérisé en ce que** chaque entrée de la base de données reposant sur des séries comprend une adresse d'entité.

7. Élément d'acheminement (302) selon la revendication 1 **caractérisé en ce que** chaque entrée de la base de données reposant sur des séries comprend un code de point SS7 ou une adresse IP.

8. Élément d'acheminement (302) selon la revendication 1, **caractérisé en ce que** le contrôleur de sous-système de base de données est conçu pour réaliser des opérations de conditionnement de numéro sur le contenu du message de signalisation avant l'accès à la base de données (332 ou 330) reposant sur des séries ou sur des exceptions.

9. Élément d'acheminement (302) selon la revendication 1, **caractérisé en ce que** le contrôleur de sous-système de base de données (328) est conçu pour déterminer un type d'entité pour une destination du message de signalisation avant l'accès à la base de données (332 ou 330) reposant sur des séries ou sur des exceptions.

10. Élément d'acheminement (302) selon la revendication 1, **caractérisé en ce que** le message de signalisation 5 comprend un message de signalisation SS7.

11. Élément d'acheminement (302) selon la revendication 1, **caractérisé en ce que** le message de signalisation comprend un message de signalisation du protocole de la norme provisoire 141 IS-41 ou un message applicable au service mobile du type GSM.

12. Élément d'acheminement (302) selon la revendication 1, **caractérisé en ce que** le réseau de communication comprend un réseau SS7 de systèmes de signalisation, une adresse IP ou un réseau ATM.

13. Élément d'acheminement (302) selon la revendication 1, **caractérisé en ce que** le numéro d'identification extrait à partir du message de signalisation est un numéro d'identification mobile.

14. Élément d'acheminement (302) selon la revendication 13, **caractérisé en ce que** le numéro d'identification mobile extrait à partir du message de signalisation est un numéro d'identité internationale de l'abonné mobile IMSI, un numéro RNIS de réseau numérique à intégration de services de station mobile MSISDN, un numéro d'appellation globale mobile, un numéro d'identification mobile ANSI-41 ou un numéro d'annuaire mobile ANSI-41.

15. Élément d'acheminement (302) selon la revendication 1, **caractérisé en ce que** les informations d'acheminement incorporées dans le message de signalisation incluent un code de point PC ou une adresse IP.

16. Élément d'acheminement (302) selon la revendication 1, **caractérisé en ce que** les informations d'acheminement incorporées dans le message de signalisation incluent au moins l'une des adresses d'entité, un indicateur d'acheminement, et un numéro de sous-système SSN.

17. Élément de routage (302) selon la revendication 1, **caractérisé en ce que** au moins l'un des numéros d'identifiants mobiles par lequel les entrées de la base de données reposant sur des exceptions sont indexées est situé en dehors des blocs ou séries de numéros d'identifiants mobiles par lesquels sont indexées les entrées dans la base de données reposant sur des exceptions.

18. Procédé de routage d'un message de signalisation dans un réseau de communications mobiles ayant un MSC (348) avec des capacités de routage HLR basées sur des séries et plusieurs HLR (352, 354, 356) stockant les informations d'abonnement pour les abonnés mobiles, le procédé étant **caractérisé par** :
(a) la réception d'un message de signalisation à partir du MSC (348) ;
(b) la réalisation d'une recherche primaire d'une base de données reposant sur des exceptions (330) en utilisant un numéro d'identification contenu au sein d'un message de signalisation, la base de données reposant sur des exceptions (330) incluant les entrées indexées par des numéros d'identifiants mobiles individuels et le stockage des informations d'acheminement pour acheminer des messages de signalisation aux HLR (352, 354, 356) ;
(c) en réponse à l'échec de localisation d'une entrée correspondant au numéro d'identification dans la base de données reposant sur des exceptions, la réalisation d'une deuxième recherche d'une base de données reposant sur des séries (332) en utilisant le numéro d'identification contenu dans le message de signalisation, la base de données reposant sur des séries (332) incluant les entrées indexées par les séries des numéros d'identifiants mobiles et le stockage des informations d'acheminement pour acheminer les messages de signalisation aux HLR (352, 354, 356) ;
(d) la modification du message de signalisation pour inclure les informations relatives aux adresses d'acheminement extraites de la base de données reposant sur des séries ou sur des exceptions (332 ou 330) ; et
(e) la transmission du message de signalisation modifié à l'un des HLR (352.354,356).

19. Procédé selon la revendication 18, **caractérisé en ce que** le message de signalisation comprend un message de signalisation SS7.

20. Procédé selon la revendication 18, **caractérisé en ce que** le message de signalisation comprend un message de signalisation du protocole de la norme provisoire 41 IS-41 ou un message applicatif au service mobile du type GSM.

21. Procédé selon la revendication 18, **caractérisé en ce que** le réseau de communication comprend un réseau SS7 de systèmes de signalisation, une adresse IP ou un réseau ATM.

22. Procédé selon la revendication 18, **caractérisé en ce que** le numéro d'identification extrait à partir du message de signalisation est un numéro d'identification mobile.

23. Procédé selon la revendication 22, **caractérisé en ce que** le numéro d'identification mobile extrait à partir du message de signalisation est un numéro d'identité internationale de l'abonné mobile IMSI, un numéro RNIS de réseau numérique à intégration de services de station mobile MSISDN, un numéro d'appellation globale mobile, un numéro d'identification mobile ANSI-41 ou un numéro d'annuaire mobile ANSI-41.

24. Procédé selon la revendication 18, **caractérisé en ce que** les informations d'acheminement incorporées dans le message de signalisation incluent un code de point PC ou une adresse IP.

25. Procédé selon la revendication 18, **caractérisé en ce que** les informations d'acheminement incorporées dans le message de signalisation incluent au moins une adresse d'entité, un indicateur d'acheminement, et un numéro de sous-système SSN.

26. Procédé selon la revendication 18, permettant de déterminer si les messages de signalisation reçus nécessitent la traduction d'une adresse d'acheminement.

27. Procédé selon la revendication 26, permettant, après avoir déterminé si les messages de signalisation nécessitent la traduction d'une adresse d'acheminement, de déterminer un type de traduction d'adresse d'acheminement requis pour les messages de signalisation.

28. Procédé selon la revendication 27, **caractérisé en ce que** la détermination d'un type de traduction d'adresses d'acheminement inclut un type de système mondial de communications mobiles (GSM) ou un élément de réseau ANSI-41 (Institut national américain de normalisation) vers lequel doivent être acheminés les messages de signalisation.

29. Procédé selon la revendication 28, **caractérisé en ce que** la détermination d'un type d'élément de réseau GSM ou ANSI-41 inclut le fait de déterminer s'il faut ou non acheminer les messages de signalisation vers un enregistreur de localisation nominal HLR, un enregistreur d'identité d'équipement EIR, un centre d'authentification AuC, ou un point de commande de service SCP.

30. Procédé selon la revendication 26, **caractérisé en ce que** le fait de déterminer si les messages de signalisation reçus nécessitent la traduction d'une adresse d'acheminement inclut l'examen des valeurs de champ dans un sous-système de connexions sémaphores (SCCP) dénommé portion CdPA de l'adresse de partie des messages de signalisation.

31. Procédé selon la revendication 30, **caractérisé en ce que** l'examen des champs de la partie CdPA SCCP des messages de signalisation inclut l'examen d'un champ Numéro de sous-système SSN, un champ Type de traduction TT, un champ Appellation globale, un champ Indicateur GTI, un champ Plan de numérotation NP, et un champ Nature de l'indicateur d'adresse NAI.

32. Procédé selon la revendication 30, **caractérisé en ce que** le fait de déterminer si un paquet de données nécessite la traduction d'une adresse d'acheminement inclut l'examen des valeurs dans une partie de sous-système de gestion de transactions (TCAP) du paquet de données.

33. Procédé selon la revendication 18, **caractérisé en ce que** :
(a) la réception d'un message de signalisation provenant du MSC (348) comprend la réception, au niveau d'un noeud d'acheminement du réseau (302) ayant un premier code de point, un message de signalisation ayant un code de point d'origine OPC égal à un deuxième code de point correspondant au MSC (348) ; et
(b) la transmission du message de signalisation modifié à l'un des HLR (352, 354, 356) comprend l'insertion du premier code de point dans le champ OPC du message de signalisation modifié.

34. Procédé selon la revendication 33, **caractérisé en ce que** la réception d'un message de signalisation provenant d'un MSC (348) comprend la réception d'un message de signalisation 7 SS7 du système de signalisation sur un réseau SS7.

35. Procédé selon la revendication 33, **caractérisé en ce que** la transmission d'un message de signalisation modifié à l'un des HLR (352, 354, ou 356) comprend la transmission d'un message de signalisation 7 SS7 du système de signalisation sur un réseau SS7.

36. Procédé selon la revendication 33, **caractérisé en ce que** la modification d'un message de signalisation pour inclure les informations relatives à l'adresse d'acheminement comprend la modification du message de signalisation pour inclure la valeur DPC d'un code de point de destination correspondant à l'un des HLR (352, 354, 356).

37. Procédé selon la revendication 18, **caractérisé en ce qu'**au moins l'un des numéros d'identifiants mobiles individuels de la base de données reposant sur des exceptions est en dehors des séries de numéros d'identifiants mobiles dans la base de données reposant sur des séries.
